# EUROPEAN PATENT SPECIFICATION

(11) **EP 4 343 934 B1**
(45) Date of publication and mention of the grant of the patent: **06.05.2026**
(21) Application number: 21969420.5
(22) Date of filing: 29.12.2021
(51) Int. Cl.: H01M 50/20, H01M 50/209, H01M 50/264

(54) **BATTERY, POWER CONSUMING APPARATUS, AND METHOD AND APPARATUS FOR MANUFACTURING BATTERY**
BATTERIE, STROMVERBRAUCHSVORRICHTUNG, UND VERFAHREN UND VORRICHTUNG ZUR HERSTELLUNG EINER BATTERIE
BATTERIE, APPAREIL CONSOMMATEUR D'ÉNERGIE, ET PROCÉDÉ ET APPAREIL DE FABRICATION DE BATTERIE

(43) Date of publication of application: 27.03.2024
(73) Proprietor: Contemporary Amperex Technology (Hong Kong) Limited, Central, Central And Western District (HK)
(72) Inventor: YE, Qiqiang, Ningde, Fujian 352100 (CN)
(74) Representative: Gong, Jinping
(86) International application number: PCT/CN2021/142468
(87) International publication number: WO 2023/123048

(56) References cited:
- CN-A- 111 819 712
- CN-U- 206 849 882
- DE-A1- 102015 217 630
- DE-A1- 102018 205 896
- DE-B4- 102015 214 185
- JP-A- 2018 032 519
- JP-A- 2021 190 352
- JP-A- H06 188 023
- US-A1- 2009 239 137
- US-A1- 2011 293 973

## Description

### Technical Field

The present application relates to the technical field of batteries, and in particular to a battery as specified in any of claims 1-9 , a power consuming apparatus as specified in claim 10, a method for manufacturing a battery as specified in claim 11, and an apparatus for manufacturing a battery as specified in claim 12 .

### Background Art

Energy conservation and emission reduction are keys to sustainable development of the automobile industry. In this case, electric vehicles play an important part in the sustainable development of the automobile industry because of their advantages in energy conservation and environmental protection. Further, for the electric vehicles, the battery technology is an important factor to their development. US2011/293973A1 relates to a battery pack. DE102015214185B4 mentions a fixing element of a battery pack.

A battery is mounted on a power consuming apparatus, such as a vehicle. Movement of the power consuming apparatus, such as the vehicle, may cause an impact on the battery to some extent. If the battery has weak stiffness and strength, the impact will have a negative effect on performance of the battery and is likely to cause safety problems. In view of this, how to improve the stiffness and strength of the battery is a technical problem urgently to be solved in the battery technology.

### Summary of the Invention

The claimed subject-matter is defined by the appended claims. The present application provides a battery as specified in any of claims 1-9, a power consuming apparatus as specified in claim 10, a method for manufacturing a battery as specified in claim 11, and an apparatus for manufacturing a battery as specified in claim 12, which can improve stiffness and strength of the battery, thereby improving performance of the battery.

In a first aspect, there is provided a battery as specified in any of claims 1-9, including: a battery cell group including a plurality of battery cells arranged in a first direction; an enclosure including a first beam and a second beam that are arranged at an interval in the first direction, where the battery cell group is arranged between the first beam and the second beam, at least one of the first beam and the second beam is a locking beam, and a wedge-shaped gap is provided between the locking beam and the battery cell group; and a wedge-shaped component configured to fill the wedge-shaped gap, so as to lock the battery cell group to the enclosure; where the wedge-shaped component includes a first surface and a second surface that are oppositely arranged, where the first surface is arranged opposite and parallel to the surface of the battery cell group facing towards the locking beam, and the second surface is arranged opposite and parallel to the surface of the locking beam facing towards the battery cell group. The battery further includes: an end plate arranged between the locking beam and the battery cell group and attached to the battery cell group, where a step is arranged on one side of the end plate facing towards the locking beam; and the wedge-shaped component further includes: a third surface connecting the first surface and the second surface; and a second extending portion extending from the third surface in the first direction towards the battery cell group, where the second extending portion is configured to cooperate with the step to limit the end plate in a second direction, the second direction is perpendicular to the first direction and perpendicular to an extending direction of the locking beam, and the extending direction of the locking beam is perpendicular to the first direction.

According to a technical solution of an embodiment of the present application, the battery cell group can be reliably and stably locked to the enclosure with the cooperation between the wedge-shaped component and the wedge-shaped gap. Moreover, an interaction force exists between the battery cells due to pressing such that adjacent battery cells restrict each other, and structural stability of the battery can be improved, thereby improving overall stiffness and strength of the battery, and reducing a safety risk caused by vibration and impact on the battery during use.

In addition, the wedge-shaped gap is provided between the first beam and/or the second beam and the battery cell group such that the battery cell group can be conveniently put into the enclosure, thereby reducing a difficulty in assembling the battery cell group into the enclosure. The wedge-shaped gap allows for a solution that the plurality of battery cells are assembled into a module and then put into the enclosure, and can also support a solution that the battery cells are put into the enclosure first and then fixed therein. After the battery cell group is put into the enclosure, the wedge-shaped gap is filled with the wedge-shaped component, so as to lock the battery cell group, thereby improving assembly efficiency.

In some possible implementations, the wedge-shaped component is fixed to the locking beam.

In the embodiment of the present application, when the wedge-shaped component is fixed to the locking beam, no relative movement is generated between the wedge-shaped component and the locking beam, and positions of the components in the enclosure are relatively fixed such that mounting stability of the battery cell group in the enclosure can be improved, thereby improving overall stiffness and strength of the battery.

In some possible implementations, a surface of the locking beam facing towards the battery cell group is obliquely arranged towards one side away from the battery cell group relative to the first direction.

In some possible implementations, the locking beam is a trapezoidal beam.

In some possible implementations, a cross-section of the trapezoidal beam is a right-angled trapezoid, an isosceles trapezoid or an ordinary trapezoid.

In some possible implementations, a surface of the battery cell group facing towards the locking beam is obliquely arranged towards one side away from the locking beam relative to the first direction.

In the embodiment of the present application, the wedge-shaped gap is formed between the locking beam and the battery cell group, and the wedge-shaped component can be embedded into the wedge-shaped gap from the end having the largest spacing between the locking beam and the battery cell group, so as to lock and position the battery cell group.

In some possible implementations, an included angle between the surface of the locking beam facing towards the battery cell group and the surface of the battery cell group facing towards the locking beam is greater than 0° and less than 90°.

In the embodiment of the present application, an included angle between the surface of the locking beam facing towards the battery cell group and the surface of the battery cell group facing towards the locking beam is set to an appropriate value, such that not only the battery cell group can be effectively locked, but also a processing difficulty of the wedge-shaped component can be reduced.

Thus, an area of contact between the wedge-shaped component and the battery cell group as well as the locking beam can be increased, thereby improving a locking capability of the wedge-shaped component with regard to the battery cell group.

In some possible implementations, the wedge-shaped component further includes: a third surface connecting the first surface and the second surface; and a first extending portion extending from the third surface in the first direction away from the battery cell group, where the first extending portion is connected to the locking beam.

The wedge-shaped component is connected to the locking beam by means of the first extending portion such that there can be no relative movement between the wedge-shaped component and the locking beam, and a locking capability of the wedge-shaped component with regard to the battery cell group can be improved, thereby improving internal structural stability of the battery.

In some possible implementations, the first extending portion and the locking beam are locked together by means of bolts.

The wedge-shaped component is clamped to the step on the end plate by means of the second extending portion such that the end plate and the battery cell group can be limited, thereby improving mounting stability of the battery cell group in the enclosure.

In addition, in the embodiment of the present application, the battery cell group is locked to the enclosure by using the wedge-shaped component, and the end plate can be provided with no bolt hole having an axis perpendicular to the first direction, so that a thickness of the end plate in the first direction can be reduced, thereby reducing a space occupied by the end plate, and improving space utilization in the battery. Further, an energy density of the battery may also be increased.

In some possible implementations, the battery further includes: a bus component configured to electrically connect the plurality of battery cells, where the bus component is arranged at one end of the battery cell group in a third direction, the third direction is parallel to an extending direction of the locking beam, and the extending direction of the locking beam is perpendicular to the first direction.

In some possible implementations, the first beam and the second beam are side walls of the enclosure.

In some possible implementations, one of the first beam and the second beam is the side wall of the enclosure, and the other one of the first beam and the second beam is a cross beam located in the enclosure. The cross beam is configured to separate the battery cell group from other battery cell groups.

In some possible implementations, the first beam and the second beam are cross beams located in the enclosure. The cross beams are configured to separate the battery cell group from other battery cell groups.

In a second aspect, there is provided a power consuming apparatus as specified in claim 10, including: the battery of the first aspect described above or any one of the possible implementations in the first aspect, where the battery is configured to supply electric energy to the power consuming apparatus.

In a third aspect, there is provided a method for manufacturing a battery as specified in claim 11, the method including: providing a battery cell group, where the battery cell group includes a plurality of battery cells arranged in a first direction; providing an enclosure, where the enclosure includes a first beam and a second beam that are arranged at an interval in the first direction, where the battery cell group is arranged between the first beam and the second beam, at least one of the first beam and the second beam is a locking beam, and a wedge-shaped gap is provided between the locking beam and the battery cell group; providing a wedge-shaped component; and filling the wedge-shaped gap with the wedge-shaped component, so as to lock the battery cell group to the enclosure.

In a fourth aspect, there is provided an apparatus for manufacturing a battery as specified in claim 12, the apparatus including: a providing module configured to: provide a battery cell group, where the battery cell group includes a plurality of battery cells arranged in a first direction; provide an enclosure, where the enclosure includes a first beam and a second beam that are arranged at an interval in the first direction, where the battery cell group is arranged between the first beam and the second beam, at least one of the first beam and the second beam is a locking beam, and a wedge-shaped gap is provided between the locking beam and the battery cell group; and provide a wedge-shaped component; and a mounting module configured to: fill the wedge-shaped gap with the wedge-shaped component, so as to lock the battery cell group to the enclosure.

### BRIEF DESCRIPTION OF THE DRAWINGS

In order to more clearly illustrate the technical solutions of the embodiments of the present application, the accompanying drawings required in the embodiments of the present application will be briefly described below. Obviously, the accompanying drawings described below are merely some embodiments of the present application, and for those of ordinary skill in the art, other accompanying drawings can be obtained from these accompanying drawings without making creative efforts.
FIG. 1 is a schematic diagram of a vehicle disclosed in an embodiment of the present application;
FIG. 2 is an exploded view of a battery disclosed in an embodiment of the present application;
FIG. 3 is a schematic diagram of a battery cell disclosed in an embodiment of the present application;
FIG. 4 is a schematic diagram of a battery disclosed in an embodiment of the present application;
FIG. 5 is a partial three-dimensional schematic diagram of the battery in FIG. 4;
FIGs. 6-9 are a schematic diagram of a battery disclosed in an embodiment of the present application;
FIG. 10 is a schematic diagram of a battery cell disclosed in an embodiment of the present application;
FIGs. 11-14 are a schematic diagram of a partial structure of a battery disclosed in an embodiment of the present application;
FIG. 15 is a partial three-dimensional schematic diagram of a battery in FIG. 14;
FIG. 16 is a schematic top view of a battery disclosed in an embodiment of the present application;
FIG. 17 is a schematic flow chart of a method for manufacturing a battery disclosed in an embodiment of the present application; and
FIG. 18 is a schematic block diagram of an apparatus for manufacturing a battery disclosed in an embodiment of the present application.
In the accompanying drawings, the accompanying drawings are not drawn to actual scale.

List of reference numerals:
1 - vehicle; 10 - battery; 11 - enclosure; 111 - first portion; 112 - second portion; 101 - first beam; 102 - second beam; 10a - first locking surface; 10b - second locking surface; 10c - third locking surface; 12 - wedge - shaped gap; 121 - first wedge - shaped gap; 122 - second wedge - shaped gap; 13 - wedge - shaped component; 131 - first wedge - shaped component; 132 - second wedge - shaped component; 1301 - first surface; 1302 - second surface; 1303 - third surface; 1304 - first extending portion; 1305 - second extending portion; 2 - battery cell group; 20 - battery cell; 201 - first wall; 202 - second wall; 211 - housing; 212a - first cover plate; 212b - second cover plate; 213 - pressure relief mechanism; 214 - electrode terminal; 215a - first protective layer; 215b - second protective layer; 216a - first support; 22 - electrode assembly; 221 - first tab; 23 - end plate; 231 - step; 231a - first step surface; 231b - second step surface; 24 - bus component; 30 - controller; and 40 - motor.

### Detailed Description of Embodiments

The implementations of the present application will be further described in detail below in combination with the accompanying drawings and the embodiments. The following detailed description of the embodiments and the accompanying drawings are used to illustratively describe the principle of the present application, and are not intended to limit the scope of the present application. That is, the present application is not limited to the described embodiments.

In the description of the present application, it is to be noted that "a plurality of" means two or more (including two), unless otherwise specified; and the orientation or positional relations indicated by the terms "up", "down", "left", "right", "inside", "outside", etc. are merely for facilitating the description of the present application and simplifying the description, rather than indicating or implying that a device or an element referred to must have a particular orientation or be constructed and operated in a particular orientation, and therefore will not be interpreted as limiting the present application. In addition, the terms "first", "second", "third", etc. are used for descriptive purposes only, and cannot be construed as indicating or implying the relative importance. The term "perpendicular" is not perpendicular in a strict sense, but within an allowable range of tolerance. The term "parallel" is not parallel in a strict sense, but within an allowable range of tolerance.

Orientation words in the following description are all directions shown in the figures, and do not limit a specific structure of the present application. In the description of the present application, it should be noted that, unless otherwise explicitly specified and defined, the terms "mounting", "connecting", and "connection" should be understood in a broad sense, for example, they may be a fixed connection, a detachable connection, or an integrated connection; and may be a direct connection, or an indirect connection via an intermediate medium. For those of ordinary skill in the art, the specific meanings of the terms mentioned above in the present application can be construed according to specific circumstances.

The term "and/or" in the present application only describes an associated relation of associated objects, and indicates that three relations can exist. For example, A and/or B can indicate that A exists, both A and B exist, and B exists. In addition, the character "/" in the present application generally indicates that the associated objects before and after the character are in a relation of "or".

Unless otherwise defined, all technical and scientific terms used in the present application have the same meanings as those commonly understood by those skilled in the art to which the present application belongs; the terms used in the description of the present application are merely for the purpose of describing particular embodiments, and are not intended to limit the present application; and the terms "comprising" and "having" and any variations thereof in the description and the claims of the present application as well as the brief description of the drawings described above are intended to cover non-exclusive inclusion. The terms "first", "second", etc. in the description and the claims of the present application as well as the accompanying drawings described above are used to distinguish different objects, rather than describe a specific order or a primary-secondary relation.

The phrase "embodiment" mentioned in the present application means that the particular features, structures and characteristics described in combination with the embodiments can be encompassed in at least one embodiment of the present application. The phrase at various locations in the description does not necessarily refer to the same embodiment, or an independent or alternative embodiment exclusive of another embodiment. Those skilled in the art should understand, in explicit and implicit manners, that an embodiment described in the present application can be combined with another embodiment.

In the present application, a battery refers to a physical module including one or more battery cells to supply electric energy. For example, the battery mentioned in the present application may include a battery module or a battery pack, etc. The battery generally includes an enclosure for packaging one or more battery cells. The enclosure may prevent liquid or other foreign matters from affecting charging or discharging of the battery cells.

Alternatively, the battery cell may include a lithium ion secondary battery, a lithium ion primary battery, a lithium-sulfur battery, a sodium-lithium ion battery, a sodium ion battery or a magnesium ion battery, etc., which is not limited in the embodiments of the present application. In some implementations, the battery cell may also be referred to as a battery unit cell.

The battery cell includes an electrode assembly and an electrolytic solution. The electrode assembly consists of a positive plate, a negative plate and a separator. The operation of the battery cell mainly relies on the movement of metal ions between the positive plate and the negative plate. The positive plate includes a positive current collector and a positive active material layer. A surface of the positive current collector is coated with the positive active material layer, the positive current collector that is not coated with the positive active material layer protrudes from the positive current collector coated with the positive active material layer, and the positive current collector that is not coated with the positive active material layer is used as a positive tab. A lithium ion battery is taken as an example, the positive current collector may be made of an aluminum, and the positive electrode active material may be lithium cobalt oxide, lithium iron phosphate, ternary lithium, lithium manganate, etc. The negative plate includes a negative current collector and a negative active material layer. A surface of the negative current collector is coated with the negative active material layer, the negative current collector that is not coated with the negative active material layer protrudes from the negative current collector coated with the negative active material layer, and the negative current collector that is not coated with the negative active material layer is used as a negative tab. The negative current collector may be made of copper, and the negative active material may be carbon, silicon, etc. In order to ensure that no fusing occurs when a large current passes, a plurality of positive tabs are provided and are stacked together, and a plurality of negative tabs are provided and are stacked together. The separator may be made of polypropylene (PP), polyethylene (PE), etc. In addition, the electrode assembly may be of a wound structure or a laminated structure, which will not be limited in the embodiments of the present application.

An enclosure of a battery in the embodiment of the present application is configured to accommodate a plurality of battery cells, a bus component, and other components of the battery. In some embodiments, a structure configured to fix a battery cell, such as a cross beam, may further be arranged in the enclosure. A shape of the enclosure may be determined according to the plurality of battery cells accommodated. In some embodiments, the enclosure may be a cube having six walls.

The bus component mentioned in the present application is configured to achieve an electric connection between the plurality of battery cells, such as a parallel connection, a series connection or a series-parallel connection. The bus component may implement the electric connection between the battery cells by connecting electrode terminals of the battery cells. In some embodiments, a bus component may be fixed to an electrode terminal of a battery cell by means of welding. The bus component transmits voltage of battery cells, a high voltage may be obtained after the plurality of battery cells are connected in series, and accordingly, the electric connection formed by the bus component may also be referred to as "high-voltage connection".

In some battery packaging technologies, a plurality of battery cells may be integrated into battery modules, and then the battery modules may be mounted in an enclosure of a battery to form a battery pack. Moreover, in some other battery packaging technologies, a plurality of battery cells may also be directly mounted in an enclosure of a battery to form a battery pack, and such a battery packaging technology may also be referred to as a cell to pack (CTP) packaging technology. In the CTP packaging technology, since an intermediate state, i.e. a battery module, is omitted, the mass of the battery pack may be reduced, and an energy density of the battery may be increased. That is, in a process of packaging the battery, the plurality of battery cells may directly form the battery, or may form the battery modules first, and then the battery modules form the battery. The battery is further arranged in a power consuming apparatus to supply electric energy to the power consuming apparatus.

For development of a battery technology, various design factors should be considered at the same time, such as energy density, cycling life, discharge capacity, charge-discharge rates and other performance parameters. In addition, structural safety of the battery needs to be further considered, so as to improve safety of the battery in the power consuming apparatus.

In some battery packaging technologies, battery cells are fixedly connected to each other by means of structural adhesive, such that the whole battery has strength and stiffness to some extent, so as to prevent impacts due to external forces. However, in this case, an area of application of the structural adhesive between the battery cells is limited, and there is no interaction between the battery cells, which affects mounting stability of the battery cells in the enclosure, thereby affecting structural stability of the battery, resulting in limited overall strength and stiffness of the packaged battery, bringing certain potential safety hazards.

In view of this, the present application provides a technical solution. A battery cell group is arranged between a first beam and a second beam that are arranged at an interval. At least one of the first beam and the second beam serves as a locking beam, and a wedge-shaped gap is provided between the locking beam and the battery cell group. The wedge-shaped gap is filled with the wedge-shaped component, so as to lock the battery cell group to an enclosure. Therefore, the battery cell group can be stably locked to the enclosure with the cooperation between the wedge-shaped component and the wedge-shaped gap. The battery cells interact with each other to form mutual constraints, thereby improving structural stability of the battery, and overall stiffness and strength of the battery may be improved, thereby reducing a safety risk caused by vibration and impact on the battery during use.

The technical solutions described in the embodiments of the present application are all applicable to various apparatuses using a battery, such as mobile phones, portable apparatuses, laptops, electric scooters, electric toys, electric tools, electric vehicles, ships and spacecrafts. For example, the spacecrafts include airplanes, rockets, space shuttles, space vehicles, etc.

It should be understood that the technical solutions described in the embodiments of the present application are not only applicable to the apparatuses described above, but also applicable to all apparatuses using batteries. However, for the sake of brevity of description, the following embodiments will be described by taking an electric vehicle as an example.

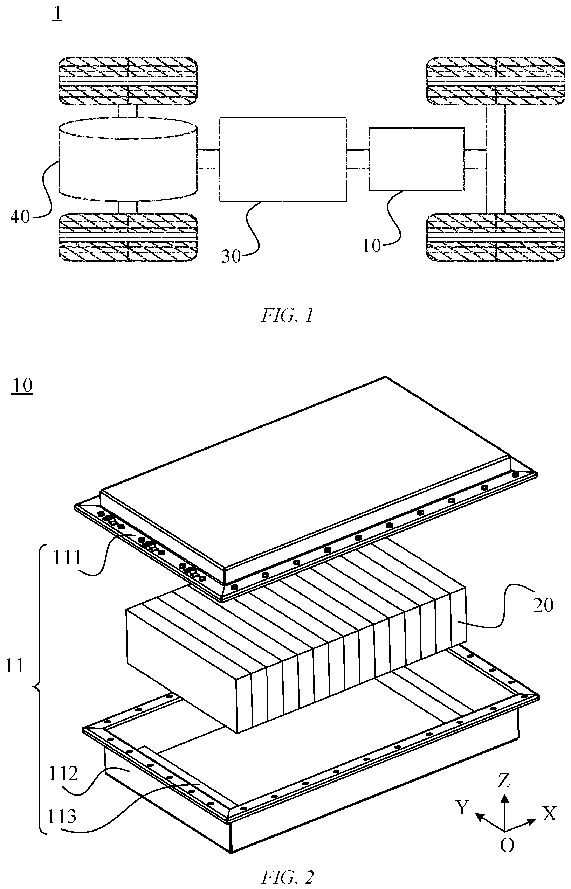

For example, FIG. 1 is a schematic diagram of a vehicle 1 of an embodiment of the present application; The vehicle 1 may be a fuel oil automobile, a fuel gas automobile or a new energy automobile, and the new energy automobile may be a pure electric automobile, a hybrid electric automobile or an extended range automobile. A motor 40, a controller 30 and a battery 10 may be arranged inside the vehicle 1. The controller 30 is configured to control the battery 10 to supply power to the motor 40. For example, the battery 10 may be arranged at a bottom, a head or a tail of the vehicle 1. The battery 10 may be configured to supply power to the vehicle 1. For example, the battery 10 may serve as a power source for operating the vehicle 1 for use in a circuit system of the vehicle 1, for example, to satisfy the working power demand of the vehicle 1 during startup, navigation and operation. In another embodiment of the present application, a battery 10 may not only serve as a power source for operating the vehicle 1, but may also serve as a power source for driving the vehicle 1, replacing or partially replacing fuel or natural gas, to provide driving power for the vehicle 1.

In order to satisfy different power demands, the battery 10 may include a plurality of battery cells which may be in series connection, parallel connection or series-parallel connection. The series-parallel connection refers to a combination of the series connection and the parallel connection. The battery 10 may also be referred to as a battery pack. Alternatively, the plurality of battery cells may be in series connection or in parallel connection or in series-parallel connection to constitute a battery module, and then a plurality of the battery modules may be connected in series or in parallel or in series-parallel to constitute the battery. That is, the plurality of battery cells may directly form the battery 10, or may form battery modules first, and then the battery modules form the battery 10.

For example, as shown in FIG. 2, which is a schematic diagram of a battery 10 of an embodiment of the present application, the battery 10 may include a plurality of battery cells 20. The battery 10 may further include an enclosure (or a casing) 11. An interior of the enclosure 11 is of a hollow structure, and the plurality of battery cells 20 are accommodated in the enclosure 11. As an example, with reference to FIG. 2, the enclosure 11 may include two portions, which are herein referred to as a first portion 111 and a second portion 112, respectively. The first portion 111 and the second portion 112 are snap-fitted together to form an accommodation space configured to accommodate the plurality of battery cells 20. Shapes of the first portion 111 and the second portion 112 may be determined according to a shape of a combination of the plurality of battery cells 20, and the first portion 111 and the second portion 112 may each have an opening. For example, the first portion 111 and the second portion 112 may both be a hollow cuboid and each have only one open surface, the opening of the first portion 111 and the opening of the second portion 112 are provided opposite each other, and the first portion 111 and the second portion 112 are snap-fitted to each other to form the enclosure 11 having a closed chamber. The plurality of battery cells 20 are combined in parallel connection or in series connection or in series-parallel connection, and then placed in the enclosure 11 that is formed after the first portion 111 and the second portion 112 are snap-fitted together.

Alternatively, in some embodiments, an enclosure 11 further includes a beam 113. The beam 113 is configured to be attached to at least one battery cell 20 of a plurality of battery cells 20, so as to fix the plurality of battery cells 20. The beam 113 is arranged in the enclosure 11 and may be fixedly connected to a first portion 111 or a second portion 112.

An arrangement manner of the beam 113 in the enclosure 11 is not limited in the embodiments of the present application. In an example, one side of the beam 113 is attached to a side wall of the enclosure 11, and the other side of the beam 113 is attached to the battery cell 20. In this case, the beam 113 may also be considered as part of a side wall of the enclosure 11. In another example, two sides of the beam 113 are each attached to the battery cell 20. In this case, the beam 113 may be considered as an auxiliary structural member configured to improve mounting stability of the plurality of battery cells 20 in the enclosure 11. The beam 113 may also be referred to as a cross beam.

In the enclosure 11, the number of beams 113 may be flexibly set according to actual use requirements, such as one, two, three, or other numbers. When the plurality of beams 113 are arranged, the plurality of beams 113 may all be side walls of the enclosure 11, may all be cross beams, may also be partially the side walls of the enclosure 11, and may be partially cross beams, which are not limited in the present application.

In the embodiment of the present application, the plurality of battery cells 20 are mounted in the enclosure 11 in many ways, as illustrated in the following examples.

Alternatively, in an implementation, a plurality of battery cells 20 may be integrated into at least one battery module, and then the at least one battery module is mounted in an enclosure 11 to form a battery pack. In the implementation, auxiliary structural members such as cross beams may further be arranged between the battery modules, so as to improve mounting stability of the battery module in the enclosure 11.

Alternatively, in another implementation, a plurality of battery cells 20 may be directly connected to each other and mounted in an enclosure 11 to form a battery pack. Since an intermediate state, i.e. a battery module, is omitted, it may be unnecessary to arrange auxiliary structural members such as cross beams in the enclosure 11, thereby reducing weight of the enclosure 10, and increasing an energy density of the enclosure 10. The implementation may also be referred to as a CTP mounting technology in the related art.

Alternatively, in another implementation, the enclosure 11 may be integrated into a power consuming apparatus in which the battery 10 is located. In other words, the enclosure 11 and a structural member in the power consuming apparatus may be integrally formed. A plurality of battery cells 20 may be directly mounted in the enclosure 11 of the power consuming apparatus after being connected to each other. As an example, the enclosure 11 may be integrated into a local area of a chassis of the vehicle 1 described above, and a plurality of battery cells 20 may be directly mounted on the chassis of the vehicle 1 after being connected to each other. The implementation may also be referred to as a cell to chassis (CTC) mounting technology in the related art.

Alternatively, the battery 10 may further include other structures, which will not be repeated herein. For example, the battery 10 may further include a bus component. The bus component is configured to achieve an electric connection, such as parallel connection, series connection, or series-parallel connection, between the plurality of battery cells 20. Specifically, the bus component may achieve an electric connection between the battery cells 20 by connecting electrode terminals of the battery cells 20. Further, the bus component may be fixed to the electrode terminal of the battery cell 20 by means of welding. Electric energy of the plurality of battery cells 20 may further pass through the enclosure 11 to be extracted by means of an electrically conductive mechanism. Alternatively, the electrically conductive mechanism may also belong to the bus component.

Any number of battery cells 20 may be configured according to different power demands. The plurality of battery cells 20 may be connected in series, in parallel or in series-parallel, so as to achieve high capacity or power.

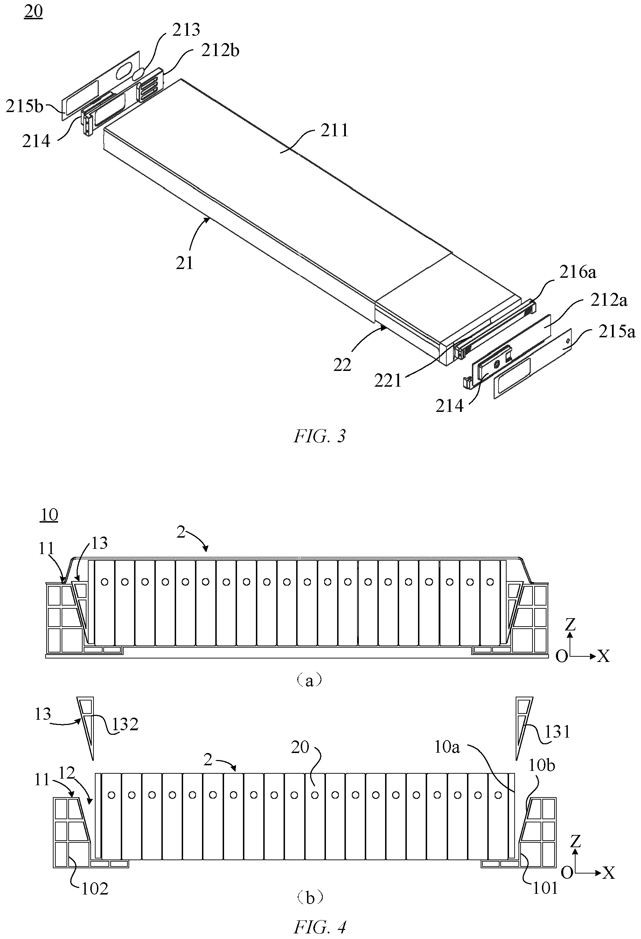

As shown in FIG. 3, which is a schematic diagram of a battery cell 20 of an embodiment of the present application, the battery cell 20 may include a battery shell 21 and one or more electrode assemblies 22 accommodated in the battery shell 21. In some embodiments, a battery shell 21 may also be referred to as a casing.

With reference to FIG. 3, the battery shell 21 may include a housing 211, a first cover plate 212a, and a second cover plate 212b. Walls of the housing 211, the first cover plate 212a and the second cover plate 212b are referred to as walls of the battery cell 20. The housing 211 is determined according to a shape after one or more electrode assemblies 22 are combined. As an example, the housing 211 shown in FIG. 3 may be a hollow cuboid. At least one surface of the housing 211 is provided with an opening, to facilitate placement of one or more electrode assemblies 22 into the housing 211. For example, in the embodiment shown in FIG. 3, two opposite surfaces of the housing 211 have openings, and the first cover plate 212a and the second cover plate 212b cover the openings on the two surfaces, respectively, and are connected to the housing 211, so as to form a closed cavity configured to accommodate the electrode assembly 22. The housing 211 is filled with an electrolyte, such as an electrolyte solution.

Alternatively, in an implementation, the first cover plate 212a and the second cover plate 212b may be formed separately and then connected to the housing 211 separately, so as to cover the openings. Alternatively, in another implementation, one of the first cover plate 212a and the second cover plate 212b is integrally formed with the housing 211, and the other one of the first cover plate and the second cover plate is formed separately and then connected to the housing 211, so as to cover an opening.

The battery cell 20 may further include two electrode terminals 214. Alternatively, as shown in FIG. 3, the two electrode terminals 214 may be arranged on the first cover plate 212a and the second cover plate 212b, respectively. Alternatively, in some other embodiments, two electrode terminals 214 may also be arranged on the same cover plate. For example, both of the electrode terminals are arranged on the first cover plate 212a or the second cover plate 212b.

The first cover plate 212a and the second cover plate 212b are generally in a shape of a flat plate, the two electrode terminals 214 may be fixed on flat plate surfaces of the first cover plate 212a and the second cover plate 212b, respectively, and the two electrode terminals 214 are a positive electrode terminal and a negative electrode terminal, respectively. Each of the electrode terminals 214 is provided with a connecting member (not shown in the figure), which may also be referred to as a current collecting member. The connecting member is located between the first cover plate 212a and the electrode assembly 22 and between the second cover plate 212b and the electrode assembly 22, and the connecting member is configured to electrically connect the electrode assembly 22 and the electrode terminal 214.

Alternatively, as shown in FIG. 3, the battery cell 20 may further include a first support 216a and a second support (not shown in the figures). The first support 216a is arranged between the electrode assembly 22 and the first cover plate 212a, and is configured to fix and connect the first cover plate 212a. Correspondingly, the second support is arranged between the electrode assembly 22 and the second cover plate 212b, and is configured to fix and connect the second cover plate 212b. Alternatively, the connecting members connecting the electrode assembly 22 and the electrode terminal 214 may be located in the first support 216a and the second support, respectively.

In addition, in the battery cell 20, each electrode assembly 22 has a first tab 221 and a second tab (not shown in the figure). The first tab 221 and the second tab have opposite polarities. For example, when the first tab 221 is a positive tab, the second tab is a negative tab. The first tab(s) 221 of one or more electrode assemblies 22 is/are connected to one electrode terminal by means of one connecting member, and the second tab(s) of one or more electrode assemblies 22 is/are connected to another electrode terminal by means of another connecting member. For example, as shown in FIG. 3, the electrode terminal 214 located on the first cover plate 212a may be connected to the first tab 221 by means of one connecting member located in the first support 216a. In addition, the other electrode terminal 214 located on the second cover plate 212b may be connected to the second tab by means of another connecting member located on the second support.

In the battery cell 20, the number of the electrode assemblies 22 may be flexibly configured according to actual use requirements, such as one, two, four or other numbers.

As an example, there may also be a pressure relief mechanism 213 arranged on one wall of the battery cell 20. The pressure relief mechanism 213 is configured to be actuated, so as to relieve an internal pressure or temperature when the internal pressure or temperature of the battery cell 20 reaches a threshold.

Alternatively, in another embodiment of the present application, the pressure relief mechanism 213 and the electrode terminal(s) 214 (positive electrode terminal and/or negative electrode terminal) are arranged on the same wall of the battery cell 20. As an example, as shown in FIG. 3, the electrode terminal 214 and the pressure relief mechanism 213 may both be arranged on the second cover plate 212b of the battery cell 20.

The pressure relief mechanism 213 and the electrode terminal 214 are arranged on the same wall of the battery cell 20, such that processing and mounting of the pressure relief mechanism 213 and the electrode terminal 214 may be facilitated, thereby being conducive to improvement in production efficiency of the battery 10.

Certainly, in other embodiments of the present application, the pressure relief mechanism 213 and the electrode terminal 214 may also be arranged on different walls of the battery cell 20. For example, two electrode terminals 214 in the battery 10 are arranged on the first cover plate 212a and the second cover plate 212b of the battery cell 20, respectively, and the pressure relief mechanism 213 is arranged on other walls of the battery 10 apart from the first cover plate 212a and the second cover plate 212b, such as the housing 211. Alternatively, the two electrode terminals 214 in the battery 10 are both arranged on the first cover plate 212a of the battery cell 20, and the pressure relief mechanism 213 is arranged on the second cover plate 212b of the battery cell 20.

The pressure relief mechanism 213 and the electrode terminal 214 are arranged on different walls of the battery cell 20, such that emissions of the battery cell 20 may be farther away from the electrode terminal 214 when the pressure relief mechanism 213 is actuated, thereby reducing an effect of the emissions on the electrode terminal 214 and the bus component, and therefore, safety of the battery may be enhanced.

The pressure relief mechanism 213 may be part of the wall in which the pressure relief mechanism is located, or may be a separate structure from the wall in which the pressure relief mechanism is located, and may be fixed to the wall in which the pressure relief mechanism is located by means of welding, for example. For example, in the embodiment shown in FIG. 3, when the pressure relief mechanism 213 is part of the second cover plate 212b, the pressure relief mechanism 213 may be formed by providing a notch on the second cover plate 212b, and a thickness of the second cover plate 212b corresponding to the notch is less than that of other areas of the pressure relief mechanism 213 apart from the notch. The notch is the weakest position of the pressure relief mechanism 213. When excessive gas produced by the battery cell 20 causes an internal pressure of the housing 211 to rise and reach a threshold, or heat generated by an internal reaction of the battery cell 20 causes an internal temperature of the battery cell 20 to rise and reach a threshold, the pressure relief mechanism 213 may fracture at the notch, resulting in communication between the interior and exterior of the housing 211. A gas pressure and temperature are released to the exterior by means of breakage of the pressure relief mechanism 213, thereby preventing explosion of the battery cell 20.

In addition, the pressure relief mechanism 213 may be various possible pressure relief mechanisms, which is not limited in the embodiment of the present application. For example, the pressure relief mechanism 213 may be a temperature-sensitive pressure relief mechanism that is configured to melt when the internal temperature of the battery cell 20 provided with the pressure relief mechanism 213 reaches a threshold; and/or the pressure relief mechanism 213 may be a pressure-sensitive pressure relief mechanism that is configured to fracture when the internal pressure of the battery cell 20 provided with the pressure relief mechanism 213 reaches a threshold.

Alternatively, as shown in FIG. 3, the battery cell 20 may further include: a first protective layer 215a and a second protective layer 215b. The first protective layer 215a and the second protective layer 215b cover the first cover plate 212a and the second cover plate 212b, respectively, so as to protect components on the two cover plates. Alternatively, when the first cover plate 212a and the second cover plate 212b are metal cover plates, the first protective layer 215a and the second protective layer 215b may be insulating layers configured to insulate the metal cover plates from the outside. In addition, it may be seen from FIG. 3 that openings adapted to the electrode terminals 214 and the pressure relief mechanism 213 may be formed on the first protective layer 215a and the second protective layer 215b, such that the electrode terminals 214 are connected to the bus component through the openings, and the pressure relief mechanism 213 releases the internal pressure of the battery cell 20 through the openings.

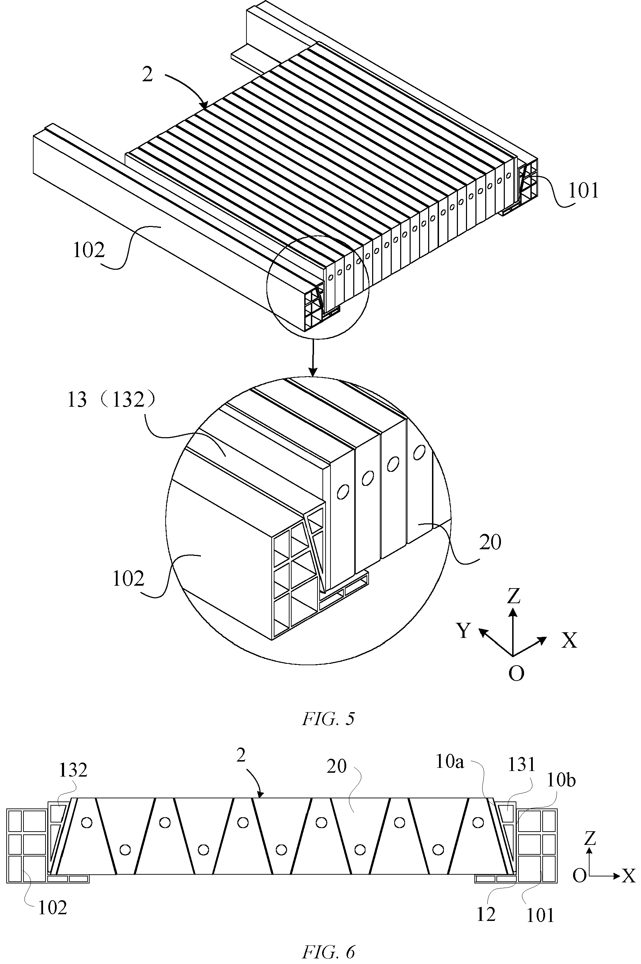

FIG. 4 shows a schematic diagram of a battery according to an embodiment of the present application. FIG. 4(a) is a schematic diagram of assembly of a battery, and FIG. 4(b) is a schematic diagram of partial decomposition of the battery. For convenience of understanding, FIG. 5 further shows a partial three-dimensional schematic diagram of the battery in FIG. 4.

With reference to FIGs. 4 and 5, the battery 10 includes a battery cell group 2 and an enclosure 11. The enclosure 11 is configured to accommodate the battery cell group 2. The battery cell group 2 includes a plurality of battery cells 20 arranged in a first direction. The enclosure 11 includes a first beam 101 and a second beam 102 that are arranged at an interval in the first direction, where the battery cell group 2 is arranged between the first beam 101 and the second beam 102, at least one of the first beam 101 and the second beam 102 is a locking beam, and a wedge-shaped gap 12 is provided between the locking beam and the battery cell group 2. The battery 10 further includes a wedge-shaped component 13. The wedge-shaped component 13 is used to fill the wedge-shaped gap 12, so as to lock the battery cell group 2 to the enclosure 11.

Alternatively, in the embodiment of the present application, for an internal structure of the battery cell 20,please refer to the related description of the embodiment shown in FIG. 3 above. In order to facilitate mounting of the battery cell 20 in the enclosure 11 and improve mounting stability of the battery cell 20, the battery cell 20 may be a polyhedral structure. For example, the battery cell 20 may be a hexahedral structure.

Optionally, in the embodiment of the present application, the enclosure 11 may be the enclosure 11 in the embodiment shown in FIG. 2 above. In order to facilitate mounting of the enclosure 11 in a power consuming device, as an example rather than a limitation, the enclosure 11 may be a hollow hexahedral structure. In the embodiment of the present application, the first beam 101 and the second beam 102 are part of the enclosure 11. In an actual assembly process, when the battery cell group 2 is at least placed between the first beam 101 and the second beam 102, a position relation between the first beam 101 and the second beam 102 is relatively fixed. After assembly is completed, a position of the first beam 101 in the enclosure 11 is relatively fixed, and a position of the second beam 102 in the enclosure 11 is relatively fixed.

In the embodiment of the present application, the first beam 101 and/or the second beam 102 are locking beams. A wedge-shaped gap 12 is formed between the locking beam and the battery cell group 2. The wedge-shaped gap 12 is formed by tilting a surface of the locking beam facing towards the battery cell group 2 and a surface of the battery cell group 2 facing towards the locking beam relative to each other; and alternatively, the wedge-shaped gap 12 is formed by gradually converging a surface of the locking beam facing towards the battery cell group 2 and a surface of the battery cell group 2 facing towards the locking beam. A distance between the surface of the locking beam facing towards the battery cell group 2 and the surface of the battery cell group 2 facing towards the locking beam (i.e. a distance between the locking beam and the battery cell group in the first direction) gradually increases in a certain direction (such as a direction perpendicular to the first direction, such as direction Z shown in FIG. 4). In other words, a plane in which the surface of the locking beam facing towards the battery cell group 2 is located and a plane in which the surface of the battery cell group 2 facing towards the locking beam is located intersect with each other in a certain direction (such as the direction perpendicular to the first direction, such as direction Z shown in FIG. 4) and then move away from each other. Herein, the distance between the surface of the locking beam facing towards the battery cell group 2 and the surface of the battery cell group 2 facing towards the locking beam may be considered as a distance between the locking beam and a corresponding point of the battery cell group 2 in the first direction.

It should be noted that in the embodiment of the present application, the first direction may include both a positive direction and a negative direction. For example, the positive direction in the first direction may be direction X indicated by an arrow in FIG. 4, and the negative direction in the first direction is opposite the positive direction in the first direction. That is, the negative direction in the first direction is opposite direction X indicated by the arrow in FIG. 4, which is an opposite direction of direction X. As an example rather than a limitation, the first direction may be perpendicular to the direction of gravity.

It should further be noted that in the embodiment of the present application, the battery cell group 2 may further include other components, such as auxiliary fixing members (such as end plates). Therefore, "the surface of the battery cell group 2 facing towards the locking beam" described above refers to a surface of the battery cell group 2 as a whole that is closest to and facing towards the locking beam. For example, if the battery cell included in the battery cell group 2 is adjacent to the locking beam, the surface of the battery cell group 2 facing towards the locking beam refers to the surface of the battery cell closest to the locking beam facing towards the locking beam. For another example, the battery cell group 2 may further include other components, such as end plates located on two sides of the plurality of battery cells 20, so that the surface of the battery cell group 2 facing towards the locking beam refers to the surface facing towards the locking beam of the end plate close to the locking beam.

It should be understood that "the surface of the locking beam facing towards the battery cell group 2" mentioned above refers to a part or the entirety of the surface. "The surface of the battery cell group 2 facing towards the locking beam" mentioned above refers to a part or the entirety of the surface. For convenience of description, in the embodiments shown in FIG. 4 and below, the surface of the battery cell group 2 facing towards the locking beam is referred to as a first locking surface 10a, and the surface of the locking beam facing towards the battery cell group 2 is referred to as a second locking surface 10b.

In the embodiment of the present application, the wedge-shaped component 13 is a component that is large at one end and small at the other end or thick at one end and thin at the other end. The wedge-shaped component 13 is adapted to a shape of the wedge-shaped gap 12 and is configured to fill a part or the entirety of the wedge-shaped gap 12, so as to fix the battery cell group 2. Specifically, the surface of the wedge-shaped component 13 facing towards the battery cell group 2 gradually converges with the surface of the wedge-shaped component 13 facing towards the locking beam.

According to the technical solution of the embodiment of the present application, the battery cell group 2 is arranged between the first beam 101 and the second beam 102 that are arranged at an interval. At least one of the first beam 101 and the second beam 102 serves as a locking beam, and a wedge-shaped gap 12 is provided between the locking beam and the battery cell group 2. The wedge-shaped component 13 may fill the wedge-shaped gap 12, so as to lock the battery cell group 2 to the enclosure 11.

In the embodiment of the present application, the battery cell group 2 can be reliably and stably locked to the enclosure 11 with the cooperation between the wedge-shaped component 13 and the wedge-shaped gap 12. Moreover, an interaction force exists between the battery cells due to pressing such that adjacent battery cells restrict each other, and structural stability of the battery can be improved, thereby improving overall stiffness and strength of the battery, and reducing a safety risk caused by vibration and impact on the battery during use.

In addition, the wedge-shaped gap 12 is provided between the first beam 101 and/or the second beam 102 and the battery cell group 2 such that the battery cell group 2 can be conveniently put into the enclosure 11, thereby reducing a difficulty in assembling the battery cell group into the enclosure. The wedge-shaped gap 12 allows for a solution that the plurality of battery cells 20 are assembled into a module and then put into the enclosure, and can also support a solution that the battery cells 20 are put into the enclosure first and then fixed therein. After the battery unit group 2 is put into the enclosure, the wedge-shaped gap 12 is filled with the wedge-shaped component 13, so as to lock the battery cell group 2, thereby improving assembly efficiency.

In addition, in the embodiment of the present application, the battery cell group 2 is locked to the enclosure 11 by using the wedge-shaped component 13, and no bolt hole having an axis perpendicular to the first direction may be provided in the end plate so that a thickness of the end plate in the first direction can be reduced, thereby reducing a space occupied by the end plate, and improving space utilization in the battery. Further, an energy density of the battery may also be increased.

Alternatively, in some embodiments, the wedge-shaped component 13 is fixed to the locking beam. That is, the wedge-shaped component 13 may be fixedly connected to the locking beam. For example, the wedge-shaped component 13 may be connected to the locking beam by means of bonding, welding, or riveting, or may be connected to the locking beam by means of threaded connection, pin connection, etc., which is not limited in the embodiment of the present application.

Referring to Figure 4, as an example rather than a limitation, if both the first beam 101 and the second beam 102 are locking beams, there is a wedge-shaped gap 12 between the first beam 101 and the battery cell group 2, and there is also a wedge-shaped gap 12 between the second beam 102 and the battery cell group 2. For convenience of description, the wedge-shaped gap between the first beam 101 and the battery cell group 2 is referred to as a first wedge-shaped gap, and the wedge-shaped gap between the second beam 102 and the battery cell group 2 is referred to as a second wedge-shaped gap. Correspondingly, the wedge-shaped component configured to fill the first wedge-shaped gap may be referred to as a first wedge-shaped component 131, and the wedge-shaped component configured to fill the second wedge-shaped gap may be referred to as a second wedge-shaped component 132. In the embodiment described above, the wedge-shaped component 13 is fixed to the locking beam. Specifically, the first wedge-shaped component 131 is fixed to the first beam 101, and the second wedge-shaped component 132 is fixed to the second beam 102. In other words, the wedge-shaped component 13 is fixed to the locking beam closest to or adjacent to the wedge-shaped component.

In the embodiment of the present application, when the wedge-shaped component 13 is fixed to the locking beam, no relative movement is generated between the wedge-shaped component 13 and the locking beam, and positions of the components in the enclosure 11 are relatively fixed such that mounting stability of the battery cell group 2 in the enclosure 11 can be improved, thereby improving overall stiffness and strength of the battery.

Optionally, in some other embodiments, a wedge-shaped component 13 may not be fixedly connected to a locking beam, and the wedge-shaped component 13 may be relatively fixed only by means of the fit between the wedge-shaped component and a wedge-shaped gap. For example, surface roughness of the wedge-shaped component 13 may be increased to increase a friction force between the wedge-shaped component 13 and the locking beam as well as the battery cell group 2, such that no relative motion is generated between the wedge-shaped component 13 and the locking beam as well as the battery cell group 2, thereby stably locking the battery cell group 2. In such a mode, additional process of the wedge-shaped component 13 is not necessary, such that assembly steps may be simplified, and assembly efficiency of the battery may be improved.

As mentioned above, the wedge-shaped gap 12 is formed by gradually converging a surface (i.e. second locking surface 10b) of the locking beam facing towards the battery cell group 2 and a surface (i.e. first locking surface 10a) of the battery cell group 2 facing towards the locking beam. In the embodiment of the present application, the wedge-shaped gap 12 is implemented in various ways, which will be introduced in detail below in combination with the accompanying drawings.

As an example, a surface of the locking beam facing towards the battery cell group 2 is obliquely arranged towards one side away from the battery cell group 2 relative to the first direction. For example, with reference to FIG. 4, the second locking surface 10b is obliquely arranged towards one side away from the battery cell group 2 relative to the first direction. In this way, the wedge-shaped gap 12 may be formed by means of the cooperation between the locking beam and the battery cell group 2.

For convenience of understanding, a case where the first beam 101 and the second beam 102 are both locking beams are taken as an example. As shown in FIG. 4, a surface of the first beam 101 facing towards the battery cell group 2 is obliquely arranged towards direction X shown in the figure relative to the first direction, and the surface of the second beam 102 facing towards the battery cell group 2 is obliquely arranged towards an opposite direction of direction X relative to the first direction. From FIG. 4, it may be seen that an included angle between the surface of the first beam 101 facing towards the battery cell group 2 and direction X is an acute angle, and an included angle between the surface of the second beam 102 facing towards the battery cell group 2 and the opposite direction of direction X is an acute angle.

Optionally, an acute angle formed by the second locking surface 10b and the first direction is [30°, 90°). For example, the acute angle may be [45°, 85°]. For another example, the acute angle may be [60°, 75°].

As another example, a surface of the battery cell group 2 facing towards a locking beam is obliquely arranged towards one side away from the locking beam in the first direction. For example, with reference to FIG. 6, the first locking surface 10a is obliquely arranged towards one side away from the locking beam relative to the first direction. Thus, the wedge-shaped gap 12 may be formed by means of the cooperation between the battery cell group 2 and the locking beam.

For convenience of understanding, a case where the first beam 101 and the second beam 102 are both locking beams are taken as an example. As shown in FIG. 5, a surface of the battery cell group 2 facing towards the first beam 101 is obliquely arranged towards one side of the opposite direction of direction X shown in the figure relative to the first direction, and the surface of the battery cell group 2 towards the second beam 102 is obliquely arranged towards one side of direction X relative to the first direction. It may be seen from FIG. 5 that an included angle between the surface of the battery cell group 2 facing towards the first beam 101 and the opposite direction of direction X is an acute angle, and an included angle between the surface of the battery cell group 2 towards the second beam 102 and direction X is an acute angle.

Optionally, an acute angle formed by the first locking surface 10a and the first direction is [30°, 90°). For example, the acute angle may be [45°, 85°]. For another example, the acute angle may be [60°, 75°].

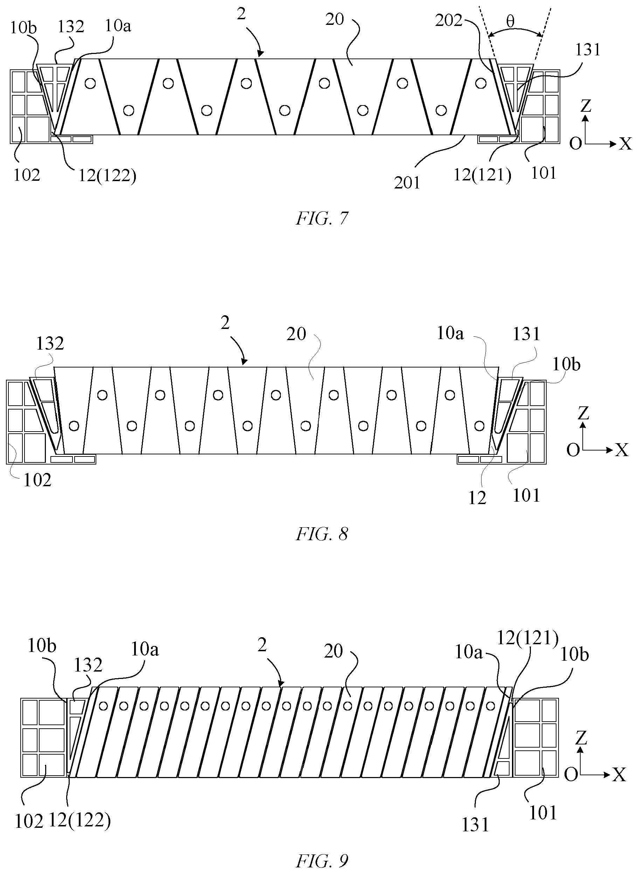

As another example, in combination with the embodiments of FIGs. 4 and 6, a surface of the locking beam facing towards the battery cell group 2 is obliquely arranged towards one side away from the battery cell group 2 relative to the first direction, and a surface of the battery cell group 2 facing towards the locking beam is obliquely arranged towards one side away from the locking beam relative to the first direction. For example, with reference to FIG. 7, the second locking surface 10b is obliquely arranged towards one side away from the battery cell group 2 relative to the first direction, and the first locking surface 10a is obliquely arranged towards one side away from a locking beam relative to the first direction, such that the wedge-shaped gap 12 can be formed.

As another example, a surface of the locking beam facing towards the battery cell group 2 is obliquely arranged towards one side away from the battery cell group 2 relative to the first direction, a surface of the battery cell group 2 facing towards the locking beam is obliquely arranged towards one side close to the locking beam relative to the first direction. A degree of inclination of the surface of the locking beam facing towards the battery cell group 2 is greater than that of the surface of the battery cell group 2 facing towards the locking beam. For example, with reference to FIG. 8, the second locking surface 10b is obliquely arranged towards one side away from the battery cell group 2 relative to the first direction, and the first locking surface 10a is obliquely arranged towards one side close to the locking beam relative to the first direction. A degree of inclination of the second locking surface 10b is greater than that of the first locking surface 10a. That is, an acute angle between the second locking surface 10b and the first direction is less than that between the first locking surface 10a and the first direction. Thus, the first locking surface 10a and the second locking surface 10b are gradually converged, such that the wedge-shaped gap 12 can be formed.

Certainly, in some other embodiments, the first locking surface 10a may also be obliquely arranged towards one side away from the locking beam relative to the first direction, and the second locking surface 10b may also be obliquely arranged towards one side close to the battery cell group 2 relative to the first direction. A degree of inclination of the first locking surface 10a is greater than that of the second locking surface 10b. That is, an acute angle between the first locking surface 10a and the first direction is less than that between the second locking surface 10b and the first direction, such that the wedge-shaped gap 12 may also be formed between the locking beam and the battery cell group 2.

In the embodiment of the present application, the wedge-shaped gap 12 is formed between the locking beam and the battery cell group 2, and the wedge-shaped component 13 can be embedded into the wedge-shaped gap 12 from the end having the largest spacing between the locking beam and the battery cell group 2, so as to lock and position the battery cell group 2.

When the first beam 101 or the second beam 102 is the locking beam, the battery cell group 2 may be locked by utilizing the wedge-shaped component 13 (such as the first wedge-shaped component 131 or the second wedge-shaped component 132), so that operation is simple, and assembly efficiency of the battery can be improved.

When both the first beam 101 and the second beam 102 are locking beams, the battery cell group 2 may be locked by utilizing the cooperation between the first wedge-shaped component 131 and the second wedge-shaped component 132, such that the battery cell group 2 in the enclosure 11 can be accurately positioned.

In the embodiment of the present application, when one of the first beam 101 and the second beam 102 is the locking beam, any of the implementations described above may be used to form the wedge-shaped gap 12. When both the first beam 101 and the second beam 102 are the locking beams, the mode for forming the wedge-shaped gap 12 (i.e. the first wedge-shaped gap) between the first beam 101 and the battery cell group 2 may be the same as (e.g. use of any one of the implementations described) or different from (e.g. use of any two of the implementations described above) the mode for forming the wedge-shaped gap 12 (i.e. the second wedge-shaped gap) between the second beam 102 and the battery cell group 2, which is not limited in the embodiment of the present application, and will be schematically described only in combination with FIGs. 7 and 9 below.

For example, with reference to FIG. 7, both the first beam 101 and the second beam 102 are locking beams. The second locking surface 10b of the first beam 101 and the second locking surface 10b of the second beam 102 are both obliquely arranged towards one side away from the battery cell group 2 relative to the first direction. The first locking surface 10a of the battery cell group 2 facing towards the first beam 101 is obliquely arranged towards one side away from the first beam 101 relative to the first direction. The first locking surface 10a of the battery cell group 2 facing towards the second beam 102 is obliquely arranged towards one side away from the second beam 102 relative to the first direction. Thus, a first wedge-shaped gap 121 is formed between the first beam 101 and the battery cell group 2, and a second wedge-shaped gap 122 is formed between the second beam 102 and the battery cell group 2.

Thus, the first wedge-shaped gap 121 and the second wedge-shaped gap 122 have larger gaps on one sides and smaller gaps on the other sides in a direction perpendicular to the first direction. In an actual assembly process, the first wedge-shaped component 131 and the second wedge-shaped component 132 are wedged into the first wedge-shaped gap 121 and the second wedge-shaped gap 122 on the same side of the battery cell group 2, respectively. For example, the first wedge-shaped component and the second wedge-shaped component are wedged from an opposite direction of direction Z as shown in FIG. 7, such that mounting is convenient, and production efficiency of a battery can be improved.

For another example, as shown in FIG. 9, both the first beam 101 and the second beam 102 are locking beams. The first locking surface 10a of the battery cell group 2 facing towards the first beam 101 is obliquely arranged towards one side close to the first beam 101 relative to the first direction. The first locking surface 10a of the battery cell group 2 facing towards the second beam 102 is obliquely arranged towards one side away from the second beam 102 relative to the first direction. The second locking surface 10b of the first beam 101 and the second locking surface 10b of the second beam 102 may be parallel to each other. Alternatively, the second locking surface 10b of the first beam 101 is obliquely arranged towards one side close to the battery cell group 2 relative to the first direction, and the second locking surface 10b of the second beam 102 is obliquely arranged towards one sideaway from the battery cell group 2 relative to the first direction. Thus, a first wedge-shaped gap 121 is formed between the first beam 101 and the battery cell group 2, and a second wedge-shaped gap 122 is formed between the second beam 102 and the battery cell group 2.

Thus, in a direction perpendicular to the first direction, one side having a larger gap of the first wedge-shaped gap 121 is on the same side as one side having a smaller gap of the second wedge-shaped gap 122, and one side having a smaller gap of the first wedge-shaped gap 121 is on the same side as one side having a larger gap of the second wedge-shaped gap 122. In an actual assembly process, the first wedge-shaped component 131 and the second wedge-shaped component 132 are wedged into the first wedge-shaped gap 121 and the second wedge-shaped gap 122 from two sides of the battery cell group 2, respectively. For example, the first wedge-shaped component 131 is wedged therein in direction Z shown in FIG. 9, and the second wedge-shaped component 132 is wedged therein in an opposite direction of direction Z shown in FIG. 9. Thus, different wedge-shaped components may have different placement modes and wedging directions, and are suitable for various complex locking scenarios.

Optionally, in the embodiments described above, the included angle between the first locking surface 10a and the second locking surface 10b may be θ (as shown in FIG. 7), where θ may be valued as (0°, 120°]. For example, θ may be valued as (0°, 90°). For another example, θ may be valued as [10°, 45°].

In the embodiment of the present application, the included angle between the first locking surface 10a and the second locking surface 10b is set to an appropriate value, such that the battery cell group 2 can be effectively locked, and a processing difficulty of the wedge-shaped component 13 can also be reduced.

Optionally, in some embodiments, a convergence trend direction of the first locking surface 10a and the second locking surface 10b may be perpendicular to the first direction. For example, the first locking surface 10a and the second locking surface 10b may be converged in direction Z or the opposite direction of direction Z, or may be converged in direction Y or the opposite direction of direction Y. The convergence trend direction involved herein may be defined as an extending direction of a central plane located between the first locking surface 10a and the second locking surface 10b, or may be defined as an extending direction of the first locking surface 10a or the second locking surface 10b, which may be defined according to actual requirements, and is not specially limited in the present application.

Alternatively, in some other embodiments, a convergence trend direction of the first locking surface 10a and the second locking surface 10b may be perpendicular to a length direction of a locking beam (such as direction Y shown in FIG. 5).

It may be understood that in a three-dimensional space, a size of the locking beam in a length direction of the locking beam is greater than that of the locking beam in other directions. In other words, a direction having the largest size in the locking beam is the length direction of the locking beam.

Alternatively, in some embodiments, the locking beam may be a trapezoidal beam (refer to FIGs. 4, 7 and 8) or a rectangular beam (refer to FIGs. 6 and 9).

In the embodiment of the present application, a trapezoidal beam may be understood as a beam having a trapezoidal (such as right angle trapezoid, isosceles trapezoid, or ordinary trapezoid) cross-section in a plane perpendicular to a length direction of the beam (such as XZ plane shown in FIG. 4). It should be noted that the trapezoid mentioned above refers to a shape of an outer contour of a cross-section of the beam. The trapezoid includes a regular trapezoid and an approximate trapezoid. The approximate trapezoid may be understood as an outer contour of the cross-section of the beam being substantially trapezoidal. Correspondingly, for the beam, a main structure of the beam is a trapezoidal structure, which means that a cross-section of the main structure of the beam in a plane perpendicular to the length direction of the beam is trapezoidal. However, the beam may further include other auxiliary members that extend from the main structure of the beam. That is, the trapezoidal beam involved in the embodiment of the present application includes a regular trapezoidal beam and a beam that is approximate to a trapezoidal beam obtained by deformation on the basis of a regular trapezoidal beam.

Similar to the trapezoidal beam, in the embodiment of the present application, a rectangular beam may be understood as a beam having a rectangular cross-section in a plane (such as XZ plane shown in FIG. 5) perpendicular to the length direction of the beam. It should be noted that a rectangle mentioned above refers to a shape of an outer contour of a cross-section of the beam. The rectangular beam involved in the embodiment of the present application includes a regular rectangular beam and a beam obtained by deformation on the basis of the regular rectangular beam (for example, a main structure of the beam is a rectangular structure, but the beam may further include other auxiliary members extending from the main structure of the beam).

Optionally, in some embodiments, with reference to FIGs. 4 and 5, the battery cell 20 included in the battery cell group 2 may be a square battery cell. For example, a square battery cell may form a square battery cell group 2. The square battery cell group 2 may cooperate with a trapezoidal beam to form a wedge-shaped gap 12. The second locking surface 10b of the trapezoidal beam is obliquely arranged towards one side away from the battery cell group 2 relative to the first direction.

Alternatively, in some other embodiments, with reference to FIG. 7, the battery cell 20 included in the battery cell group 2 is a polyhedral structure. The battery cell 20 includes a first wall 201 and a second wall 202 that are connected to each other. The first wall 201 is parallel to the first direction, and the second wall 202 is obliquely arranged relative to the first wall 201. The plurality of battery cells 20 may be stacked in the first direction to form the battery cell group 2. Adjacent battery cells 20 may be attached to each other by means of the second wall 202. For example, as shown in FIGs. 6-9, the second wall 202 of the battery cell 20 close to the locking beam may cooperate with a rectangular beam or trapezoidal beam to form the wedge-shaped gap 12.

In the embodiment of the present application, the second wall 202 of the battery cell 20 is obliquely arranged relative to the first wall 201, and two adjacent battery cells in the first direction are attached to each other by means of second walls 202 of the battery cells. Therefore, an interaction force is formed between adjacent second walls 202, such that at least one oblique second wall 202 of each battery cell is pressed by the oblique second wall 202 of the adjacent battery cell. The interaction force is formed between adjacent battery cells, such that the battery cells restrict each other, such that overall stiffness and strength of the battery can be improved, thereby reducing a safety risk caused by vibration and impact on the battery during use.

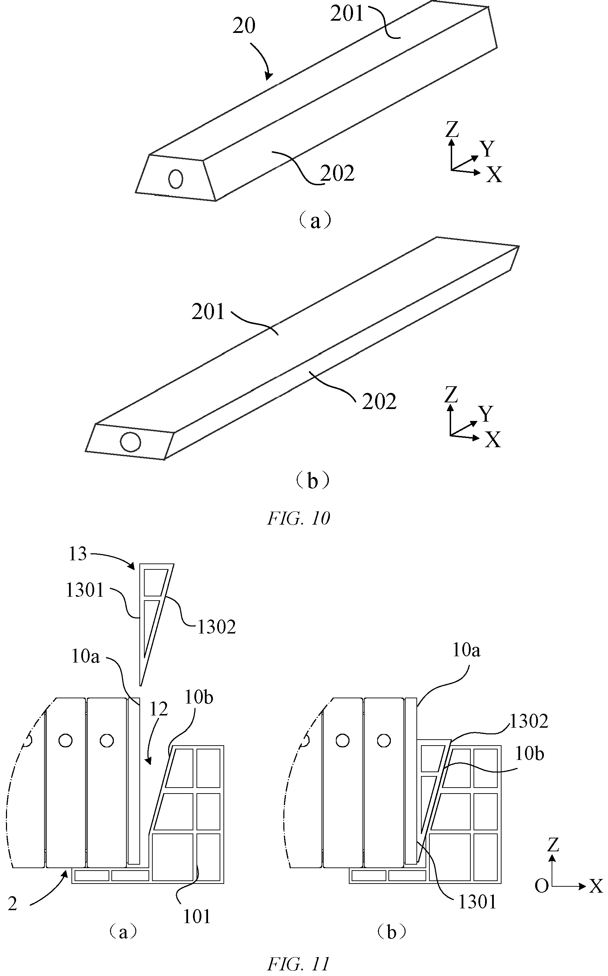

FIG. 10 shows a schematic diagram of a battery cell according to an embodiment of the present application.

In an example, as shown of FIG. 10(a), the battery cell 20 may include two first walls 201 arranged in parallel and two second walls 202 arranged in a non-parallel way. A cross-section of the battery cell 20 on a plane perpendicular to the first wall 201 and second wall 202 is trapezoidal.

Thus, when the plurality of battery cells 20 are stacked in the first direction, it is convenient to connect the plurality of battery cells, thereby improving production efficiency of the battery.

In another example, as shown in FIG. 10(b), the battery cell 20 may include two first walls 201 arranged in parallel and two second walls 202 arranged in parallel. A cross-section of the battery cell 20 in a plane perpendicular to the first wall 201 and the second wall 202 is a parallelogram.

Therefore, when the plurality of battery cells 20 are stacked in the first direction, it is convenient to connect the plurality of battery cells, thereby improving production efficiency of the battery. Moreover, a structure of the battery cell 20 is regular and symmetrical, facilitating manufacturing and mounting of the battery cell.

It may be understood that the battery cell 20 may further be a polyhedral structure having other shapes, such as triangular prism and pentaprism, which may be specifically designed according to actual requirements, and will not be described in detail herein.

In combination with FIGs. 4-10 above, the structure of the battery according to the embodiment of the present application is mainly introduced, and the wedge-shaped gap 12 involved in the present application is described in detail. In combination with FIGs. 11-14 below, the wedge-shaped component 13 involved in the present application will be mainly introduced in detail. For relevant descriptions of other components, reference can be made to the description above, and they will not be repeated in the following text for brevity.

FIG. 11 is a schematic diagram of a partial structure of a battery according to an embodiment of the present application.

As shown in FIG. 11(a), the wedge-shaped component 13 includes a first surface 1301 and a second surface 1302 that are oppositely arranged. The first surface 1301 is configured to be attached to a surface of the battery cell group 2 facing towards a locking beam (i.e. a first locking surface 10a), and the second surface 1302 is configured to be attached to a surface of the locking beam facing towards the battery cell group (i.e. a second locking surface 10b).

When the wedge-shaped gap 12 is filled with the wedge-shaped component 13, as shown in FIG. 11(b), the first surface 1301 of the wedge-shaped component 13 is arranged opposite and parallel to a surface of the battery cell group 2 facing towards a locking beam, and the second surface 1302 of the wedge-shaped component 13 is arranged opposite and parallel to a surface of the locking beam facing towards the battery cell group 2. After the wedge-shaped component 13 is assembled, the first surface 1301 is attached to the first locking surface 10a, and the second surface 1302 is attached to the second locking surface 10b.

In the embodiment of the present application, the first surface 1301 and the second surface 1302 of the wedge-shaped component 13 are parallel to and attached to the first locking surface 10a and the second locking surface 10b, respectively, such that an area of contact between the wedge-shaped component 13 and the battery cell group 2 as well as the locking beam can be increased, and the locking capability of the wedge-shaped component 13 with regard to the battery cell group 2 can be improved.

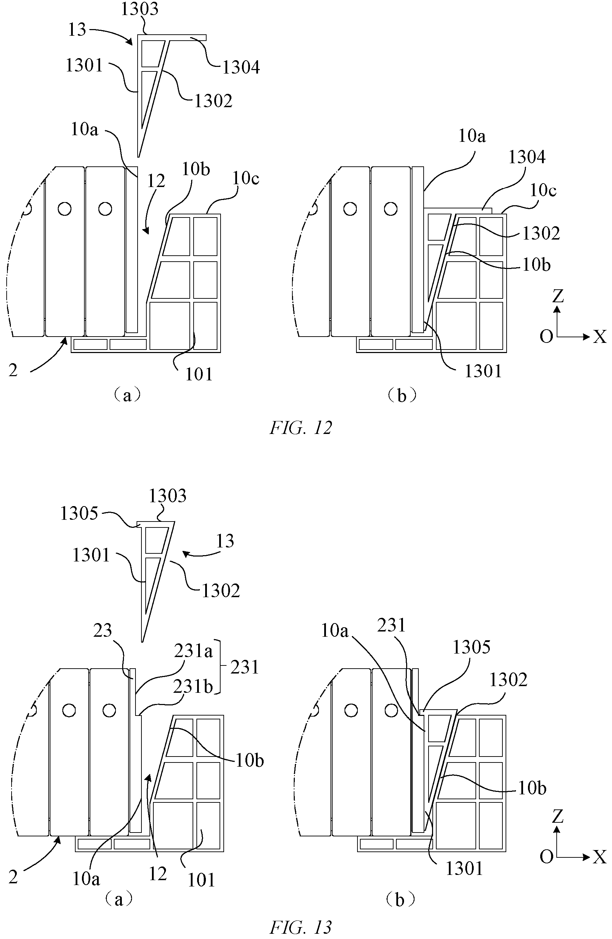

FIG. 12 shows a schematic diagram of a partial structure of another battery according to an embodiment of the present application. Unlike the battery shown in FIG. 11, as shown in FIG. 12(a), the wedge-shaped component 13 further includes a third surface 1303 connecting the first surface 1301 and the second surface 1302, and a first extending portion 1304 extending from the third surface 1303 in the first direction away from the battery cell group 2. The first extending portion 1304 is configured to be connected to the locking beam.

After the wedge-shaped component 13 is assembled, as shown in FIG. 12(b), the first surface 1301 is attached to the first locking surface 10a, the second surface 1302 is attached to the second locking surface 10b, and the first extending portion 1304 is connected to the locking beam.

Alternatively, the first extending portion 1304 may be connected to the locking beam by means of bonding, welding, riveting, bolting, etc.

Alternatively, in some embodiments, with reference to FIG. 12, the locking beam may include a third locking surface 10c connected to the second locking surface 10b. The third locking surface 10c is configured to be attached to the first extending portion 1304.

In the embodiment of the present application, the wedge-shaped component 13 is connected to the locking beam by means of the first extending portion 1304 such that no relative movement cannot be generated between the wedge-shaped component 13 and the locking beam, and a locking capability of the wedge-shaped component 13 with regard to the battery cell group 2 can be improved, thereby improving internal structural stability of the battery.

FIG. 13 shows a schematic diagram of a partial structure of another battery according to an embodiment of the present application. Unlike the battery shown in FIG. 11, as shown in FIG. 13(a), the wedge-shaped component 13 further includes a third surface 1303 connecting the first surface 1301 and the second surface 1302, and a second extending portion 1305 extending from the third surface 1303 in the first direction towards the battery cell group 2.

With continued reference to FIG. 13 (a), the battery 10 further includes an end plate 23. The end plate 23 is arranged between the locking beam and the battery cell group 2 and is attached to the battery cell group 2. A step 231 is arranged on one side of the end plate 23 facing towards the locking beam. The second extending portion 1305 is configured to cooperate with the step 231 to limit the end plate 23 in a second direction.

In the embodiment of the present application, the second direction is perpendicular to the first direction and perpendicular to an extending direction of the locking beam, and the extending direction of the locking beam is perpendicular to the first direction. In other words, the first direction, the second direction and the extending direction of the locking beam are three mutually perpendicular directions, and are, for example, direction X, direction Z and direction Y, respectively, shown in the figures.

It should be noted that the extending direction of the locking beam may be considered as a length direction of the locking beam. It may be understood that in a three-dimensional space, a size of the locking beam in its length direction is greater than that of the locking beam in other directions. That is, the direction having the largest size in the locking beam is the length direction of the locking beam, i.e., the extending direction of the locking beam.

After the wedge-shaped component 13 is assembled, as shown in FIG. 13(b), the first surface 1301 is attached to the first locking surface 10a, the second surface 1302 is attached to the second locking surface 10b, and the second extending portion 1305 cooperates with the step 231, thereby limiting the end plate 23 in the second direction. Since the end plate 23 is attached to the battery cell group 2, the battery cell group 2 may be limited by means of the cooperation between the second extending portion 1305 and the step 231.

Alternatively, in some embodiments, the step 231 may include a first step surface 231a and a second step surface 231b that are connected to each other. The second step surface 231b is perpendicular to the first step surface 231a. The first step surface 231a and the first locking surface 10a face the locking beam, and the second step surface 231b is configured to connect the first step surface 231a and the first locking surface 10a.

That is, the end plate 23 may include the first step surface 231a, the second step surface 231b and the first locking surface 10a. The first step surface 231a and the first locking surface 10a face towards the locking beam and are connected to each other by means of the second step surface 231b. The first step surface 231a and the second step surface 231b form the step.

Alternatively, a projection of the first step surface 231a in the first direction does not overlap a projection of the first locking surface 10a in the first direction. A projection of the second step surface 231b in the second direction is located in a range of a projection of the end plate 23 in the second direction.

In the embodiment of the present application, the wedge-shaped component 13 is clamped to the step 231 on the end plate 23 by means of the second extending portion 1305, such that the end plate 23 and the battery cell group 2 can be limited, thereby improving mounting stability of the battery cell group 2 in the enclosure.

It should be noted that when the end plate is arranged, the end plate is generally attached to the battery cell. When the plurality of battery cells are provided, the end plate is arranged on one side of the plurality of battery cells as a whole. Therefore, in some embodiments, the end plate may also be considered as part of the battery cell group 2.

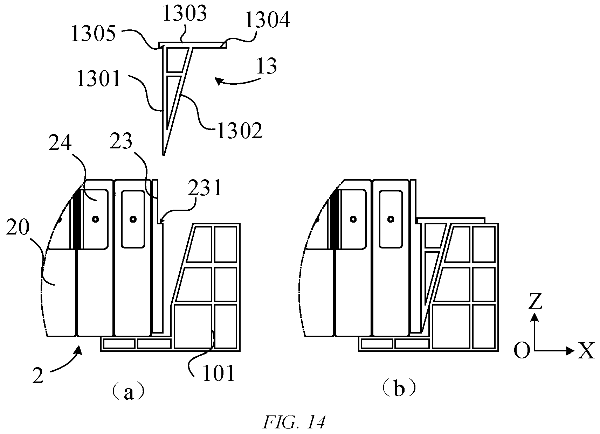

FIG. 14 shows a schematic diagram of a partial structure of another battery according to an embodiment of the present application. Unlike the battery shown in FIG. 13, the wedge-shaped component 13 further includes a first extending portion 1304 extending from the third surface 1303 in the first direction away from the battery cell group 2. The first extending portion 1304 is configured to be connected to the locking beam. The first extending portion 1304 shown in FIG. 14 is the same as the first extending portion 1304 introduced in FIG. 12. Reference may be made to related description of FIG. 12 for specific description, which will not be repeated herein for brevity.

Alternatively, in some embodiments, a battery 10 may further include: a bus component 24. The bus component 24 is configured to electrically connect a plurality of battery cells 20. The bus component 24 is arranged at one end of the battery cell group 2 in a third direction. The third direction is parallel to an extending direction of the locking beam, and the extending direction of the locking beam is perpendicular to the first direction.

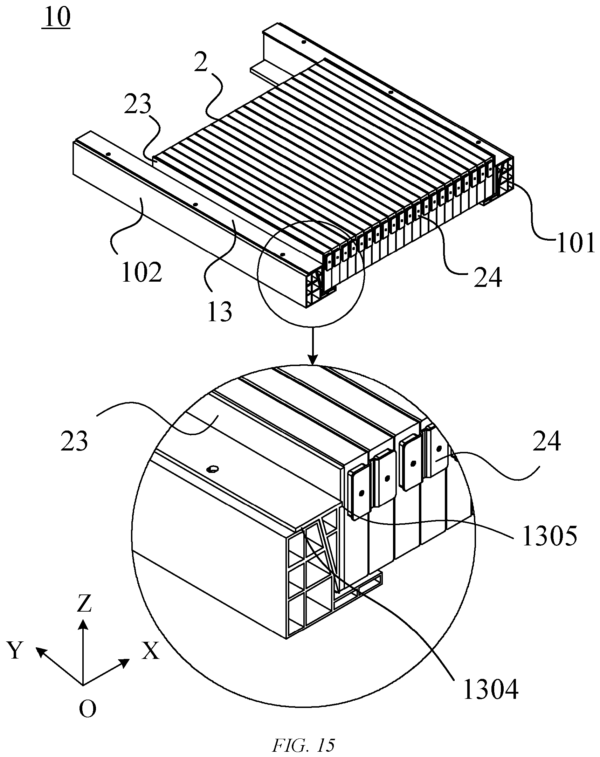

For convenience of understanding, FIG. 15 shows a partial three-dimensional schematic diagram of a battery in FIG. 14. As shown in FIG. 15, a battery 10 includes a first beam 101 and a second beam 102 that are arranged at an interval in a first direction, and a battery cell group 2 arranged between the first beam 101 and the second beam 102. The first beam 101 and/or the second beam 102 are locking beams. The battery cell group 2 includes a plurality of battery cells 20 stacked in the first direction. End plates 23 are attached to two sides of the plurality of battery cells 20, and the step 231 shown in FIG. 14 is arranged on one side of the end plate 23 facing towards the locking beam. The wedge-shaped gap 12 described above is provided between the end plate 23 and the locking beam. The battery 10 further includes a wedge-shaped component 13 configured to fill a wedge-shaped gap 12 between the end plate 23 and the locking beam. The wedge-shaped component 13 has a first extending portion 1304 and a second extending portion 1305 as shown in FIG. 14. The first extending portion 1304 is configured to be connected to the locking beam, and the second extending portion 1305 is configured to cooperate with the step 231 on the end plate 23 to limit the end plate 23.

Alternatively, in an embodiment, an assembly process of the battery shown in FIG. 15 is as follows:
step 1), a plurality of battery cells 20 are assembled outside an enclosure 11 to form a battery cell group 2, where end plates 23 are attached to two sides of the plurality of battery cells 20, and a step 231 is arranged on an outer side of the end plate 23;
step 2), the battery cell group 2 is put into the enclosure 11 and placed between a first beam 101 and a second beam 102, where the step 231 on the end plate 23 faces a locking beam (the locking beam is the first beam 101 and/or the second beam 102);
step 3), a wedge-shaped component 13 is pressed into a wedge-shaped gap 12 between the locking beam and the battery cell group 2, where a second extending portion 1305 of the wedge-shaped component 13 is clamped to the step 231; and
step 4), a first extending portion 1304 of the wedge-shaped component 13 is fixed to the locking beam, and for example, the first extending portion 1304 and the locking beam are locked together by means of bolts.

It should be noted that FIGs. 11-14 is illustrated by taking the first beam 101 as a locking beam as example, but it should be understood that the solutions described in FIGs. 11-14 are also suitable for an enclosure in which the second beam 102 is a locking beam, which will not be described in detail for brevity.

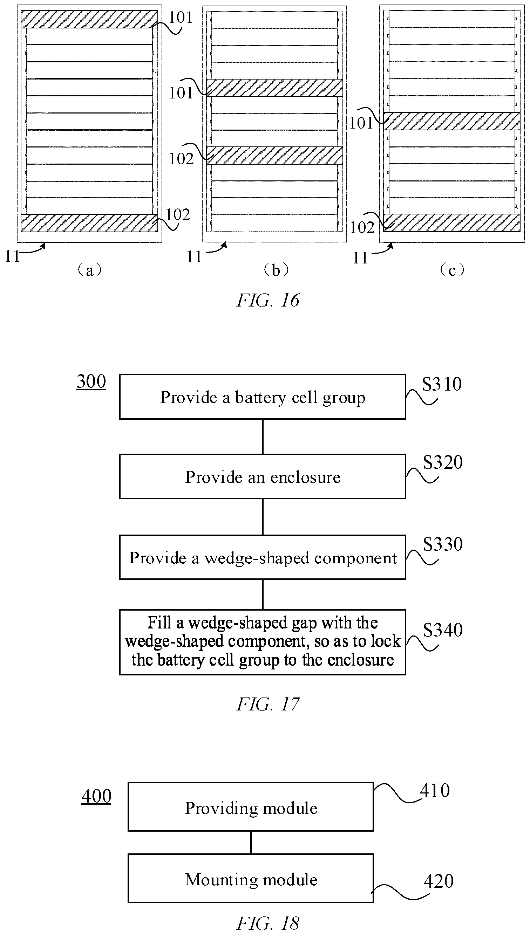

FIG. 16 shows a schematic top view of a battery according to an embodiment of the present application, which is configured to describe configuration positions of a first beam and a second beam.

Alternatively, as shown in FIG. 16(a), in some embodiments, the first beam 101 and the second beam 102 are side walls of the enclosure 11.

Alternatively, as shown in FIG. 16(b), in some other embodiments, the first beam 101 and the second beam 102 are cross beams in the enclosure 11.

Alternatively, as shown in (c) in FIG. 16, in some other embodiments, one of the first beam 101 and the second beam 102 is a side wall of the enclosure 11, and the other one of the first beam and the second beam is a cross beam located in the enclosure 11.

Alternatively, when a locking beam (i.e. a first beam 101 and/or a second beam 102) is a cross beam, the locking beam may be configured to separate and fix two battery cell groups. For example, the locking beam may be configured to separate a first battery cell group from a second battery cell group. Alternatively, a surface of the locking beam facing towards the first battery cell group may be obliquely arranged towards one side away from the first battery cell group relative to the first direction, and/or a surface of the first battery cell group facing towards the locking beam may be obliquely arranged towards one side away from the locking beam relative to the first direction. A surface of the locking beam facing towards the second battery cell group may be obliquely arranged towards one side away from the second battery cell group relative to the first direction, and/or a surface of the second battery cell group facing towards the locking beam may be obliquely arranged towards one side away from the locking beam relative to the first direction. Therefore, a wedge-shaped gap may be formed between the first battery cell group and the locking beam, and a wedge-shaped gap may be formed between the second battery cell group and the locking beam. Thus, the first battery cell group and the second battery cell group may be locked by means of the same locking beam.

In the embodiment of the present application, structures of the first beam 101 and the first beam 102 may be the same or different, which is not particularly limited herein.

Alternatively, in the embodiment of the present application, the first beam 101 and/or the second beam 102 may be a solid beam, a hollow beam, or a hollowed-out beam. When the first beam 101 and/or the second beam 102 are/is a hollow beam or hollowed-out beam, weight of the whole battery can be reduced.

The battery cell, the battery, and the power consuming apparatus of the embodiments of the present application are described above, and a method and apparatus for manufacturing a battery of the embodiments of the present application will be described below. For those parts that are not described in detail, please refer to the embodiments described above.

FIG. 17 shows a schematic flow chart of a method 300 for manufacturing a battery 10 of an embodiment of the present application. As shown in FIG. 17, the method 300 may include the following steps.

At S310, a battery cell group 2 is provided.

At S320, an enclosure 11 is provided.

The battery cell group 2 includes a plurality of battery cells 20 arranged in a first direction. The enclosure 11 includes a first beam 101 and a second beam 102 that are arranged at an interval in the first direction, where the battery cell group 2 is arranged between the first beam 101 and the second beam 102, at least one of the first beam 101 and the second beam 102 is a locking beam, and a wedge-shaped gap 12 is provided between the locking beam and the battery cell group 2.

At S330, a wedge-shaped component 13 is provided.

At S340, the wedge-shaped gap 12 is filled with the wedge-shaped component 13, so as to lock the battery cell group 2 to the enclosure 11.

FIG. 18 is a schematic block diagram of an apparatus 400 for manufacturing a battery 10 of an embodiment of the present application. As shown in FIG. 18, the apparatus 400 may include:
a providing module 410, where the providing module 410 is configured to:
provide a battery cell group 2, where the battery cell group 2 includes a plurality of battery cells 20 arranged in a first direction;
provide an enclosure 11, where the enclosure 11 includes a first beam 101 and a second beam 102 that are arranged at an interval in the first direction, where the battery cell group 2 is arranged between the first beam 101 and the second beam 102, at least one of the first beam 101 and the second beam 102 is a locking beam, and a wedge-shaped gap 12 is provided between the locking beam and the battery cell group 2; and
provide a wedge-shaped component 13; and
a mounting module 420 configured to fill the wedge-shaped gap 12 with the wedge-shaped component 13, so as to lock the battery cell group 2 to the enclosure 11.

Although the present application has been described with reference to the preferred embodiments, various modifications can be made to the present application and components in the present application can be substituted with equivalents without departing from the scope of the present application. In particular, various technical features mentioned in the various embodiments can be combined in any way as long as no structural conflict exists. The present application is not limited to the specific embodiments disclosed herein but includes all the technical solutions that fall within the scope of the appended claims.

## Claims

1. A battery (10), comprising:
a battery cell group (2) comprising a plurality of battery cells (20) arranged in a first direction;
an enclosure (11) comprising a first beam (101) and a second beam (102) that are arranged at an interval in the first direction, wherein the battery cell group (2) is arranged between the first beam (101) and the second beam (102), at least one of the first beam (101) and the second beam (102) is a locking beam, and a wedge-shaped gap (12) is provided between the locking beam and the battery cell group (2); and
a wedge-shaped component (13) configured to fill the wedge-shaped gap (12), so as to lock the battery cell group (2) to the enclosure (11);
wherein the wedge-shaped component (13) comprises a first surface (1301) and a second surface (1302) that are oppositely arranged, wherein the first surface (1301) is arranged opposite and parallel to the surface of the battery cell group (2) facing towards the locking beam, and the second surface (1302) is arranged opposite and parallel to the surface of the locking beam facing towards the battery cell group (2); and
wherein the battery (10) further comprises:
an end plate (23) arranged between the locking beam and the battery cell group (2) and attached to the battery cell group (2), wherein a step (231) is arranged on one side of the end plate (23) facing towards the locking beam; and
the wedge-shaped component (13) further comprises:
a third surface (1303) connecting the first surface (1301) and the second surface (1302); and
a second extending portion (1305) extending from the third surface (1303) in the first direction towards the battery cell group (2), wherein the second extending portion (1305) is configured to cooperate with the step (231) to limit the end plate (23) in a second direction, the second direction is perpendicular to the first direction and perpendicular to an extending direction of the locking beam, and the extending direction of the locking beam is perpendicular to the first direction.

2. The battery (10) according to claim 1, wherein the wedge-shaped component (13) is fixed to the locking beam.

3. The battery (10) according to claim 1 or 2, wherein a surface of the locking beam facing towards the battery cell group (2) is obliquely arranged towards one side away from the battery cell group (2) relative to the first direction.

4. The battery (10) according to claim 3, wherein the locking beam is a trapezoidal beam.

5. The battery (10) according to any one of claims 1-4, wherein a surface of the battery cell group (2) facing towards the locking beam is obliquely arranged towards one side away from the locking beam relative to the first direction.

6. The battery (10) according to any one of claims 3-5, wherein an included angle between the surface of the locking beam facing towards the battery cell group (2) and the surface of the battery cell group (2) facing towards the locking beam is greater than 0° and less than 90°.

7. The battery (10) according to claim 1, wherein the wedge-shaped component (13) further comprises:
a third surface (1303) connecting the first surface (1301) and the second surface (1302); and
a first extending portion (1304) extending from the third surface (1303) in the first direction away from the battery cell group (2), wherein the first extending portion (1304) is connected to the locking beam.

8. The battery (10) according to any one of claims 1-7, wherein the battery (10) further comprises:
a bus component (24) configured to electrically connect the plurality of battery cells (20), wherein the bus component (24) is arranged at one end of the battery cell group (2) in a third direction, the third direction is parallel to an extending direction of the locking beam, and the extending direction of the locking beam is perpendicular to the first direction.

9. The battery (10) according to any one of claims 1-8, wherein the first beam (101) and the second beam (102) are side walls of the enclosure (11).

10. A power consuming apparatus, comprising: the battery (10) according to any one of claims 1-9, wherein the battery (10) is configured to supply electric energy to the power consuming apparatus.

11. A method for manufacturing a battery (10), comprising:
providing a battery cell group (2), wherein the battery cell group (2) comprises a plurality of battery cells (20) arranged in a first direction;
providing an enclosure (11), wherein the enclosure (11) comprises a first beam (101) and a second beam (102) that are arranged at an interval in the first direction, wherein the battery cell group (2) is arranged between the first beam (101) and the second beam (102), at least one of the first beam (101) and the second beam (102) is a locking beam, and a wedge-shaped gap (12) is provided between the locking beam and the battery cell group (2);
providing a wedge-shaped component (13); and
filling the wedge-shaped gap (12) with the wedge-shaped component (13), so as to lock the battery cell group (2) to the enclosure (11);
wherein the wedge-shaped component (13) comprises a first surface (1301) and a second surface (1302) that are oppositely arranged, wherein the first surface (1301) is arranged opposite and parallel to the surface of the battery cell group (2) facing towards the locking beam, and the second surface (1302) is arranged opposite and parallel to the surface of the locking beam facing towards the battery cell group (2); and
wherein the battery (10) further comprises:
an end plate (23) arranged between the locking beam and the battery cell group (2) and attached to the battery cell group (2), wherein a step (231) is arranged on one side of the end plate (23) facing towards the locking beam; and
the wedge-shaped component (13) further comprises:
a third surface (1303) connecting the first surface (1301) and the second surface (1302); and
a second extending portion (1305) extending from the third surface (1303) in the first direction towards the battery cell group (2), wherein the second extending portion (1305) is configured to cooperate with the step (231) to limit the end plate (23) in a second direction, the second direction is perpendicular to the first direction and perpendicular to an extending direction of the locking beam, and the extending direction of the locking beam is perpendicular to the first direction.

12. An apparatus for manufacturing a battery (10), comprising:
a providing module, configured to:
provide a battery cell group (2), wherein the battery cell group (2) comprises a plurality of battery cells (20) arranged in a first direction;
provide an enclosure (11), wherein the enclosure (11) comprises a first beam (101) and a second beam (102) that are arranged at an interval in the first direction, wherein the battery cell group (2) is arranged between the first beam (101) and the second beam (102), at least one of the first beam (101) and the second beam (102) is a locking beam, and a wedge-shaped gap (12) is provided between the locking beam and the battery cell group (2); and
provide a wedge-shaped component (13); and
a mounting module configured to:
fill the wedge-shaped gap (12) with the wedge-shaped component (13), so as to lock the battery cell group (2) to the enclosure (11);
wherein the wedge-shaped component (13) comprises a first surface (1301) and a second surface (1302) that are oppositely arranged, wherein the first surface (1301) is arranged opposite and parallel to the surface of the battery cell group (2) facing towards the locking beam, and the second surface (1302) is arranged opposite and parallel to the surface of the locking beam facing towards the battery cell group (2); and
wherein the battery (10) further comprises:
an end plate (23) arranged between the locking beam and the battery cell group (2) and attached to the battery cell group (2), wherein a step (231) is arranged on one side of the end plate (23) facing towards the locking beam; and
the wedge-shaped component (13) further comprises:
a third surface (1303) connecting the first surface (1301) and the second surface (1302); and
a second extending portion (1305) extending from the third surface (1303) in the first direction towards the battery cell group (2), wherein the second extending portion (1305) is configured to cooperate with the step (231) to limit the end plate (23) in a second direction, the second direction is perpendicular to the first direction and perpendicular to an extending direction of the locking beam, and the extending direction of the locking beam is perpendicular to the first direction.

## Patentansprüche

1. Batterie (10), umfassend:
eine Batteriezellgruppe (2), die eine Mehrzahl von Batteriezellen (20) umfasst, die in einer ersten Richtung angeordnet sind;
ein Gehäuse (11), das einen ersten Träger (101) und einen zweiten Träger (102) umfasst, die in der ersten Richtung beabstandet angeordnet sind, wobei die Batteriezellgruppe (2) zwischen dem ersten Träger (101) und dem zweiten Träger (102) angeordnet ist, mindestens einer des ersten Trägers (101) und des zweiten Trägers (102) ein Arretierträger ist und zwischen dem Arretierträger und der Batteriezellgruppe (2) ein keilförmiger Spalt (12) vorgesehen ist; und
eine keilförmige Komponente (13), die so ausgelegt ist, dass sie den keilförmigen Spalt (12) ausfüllt, um die Batteriezellgruppe (2) an dem Gehäuse (11) zu verriegeln;
wobei die keilförmige Komponente (13) eine erste Oberfläche (1301) und eine zweite Oberfläche (1302) umfasst, die einander gegenüberliegend angeordnet sind, wobei die erste Oberfläche (1301) der Oberfläche der Batteriezellgruppe (2), die dem Arretierträger zugewandt ist, gegenüberliegend und parallel angeordnet ist, und die zweite Oberfläche (1302) der Oberfläche des Arretierträgers, die der Batteriezellgruppe (2) zugewandt ist, gegenüberliegend und parallel angeordnet ist; und
wobei die Batterie (10) ferner umfasst:
eine Endplatte (23), die zwischen dem Arretierträger und der Batteriezellgruppe (2) angeordnet und an der Batteriezellgruppe (2) befestigt ist, wobei an einer Seite der Endplatte (23), die dem Arretierträger zugewandt ist, eine Stufe (231) vorgesehen ist; und
wobei die keilförmige Komponente (13) ferner umfasst:
eine dritte Oberfläche (1303), die die erste Oberfläche (1301) und die zweite Oberfläche (1302) verbindet; und
einen zweiten Erstreckungsabschnitt (1305), der sich von der dritten Oberfläche (1303) in der ersten Richtung auf die Batteriezellgruppe (2) zu erstreckt, wobei der zweite Erstreckungsabschnitt (1305) so ausgelegt ist, dass er mit der Stufe (231) zusammenwirkt, um die Endplatte (23) in einer zweiten Richtung zu begrenzen, wobei die zweite Richtung senkrecht zur ersten Richtung und senkrecht zu einer Erstreckungsrichtung des Arretierträgers ist und die Erstreckungsrichtung des Arretierträgers senkrecht zur ersten Richtung ist.

2. Batterie (10) nach Anspruch 1, wobei die keilförmige Komponente (13) an dem Arretierträger befestigt ist.

3. Batterie (10) nach Anspruch 1 oder 2, wobei eine Oberfläche des Arretierträgers, die der Batteriezellgruppe (2) zugewandt ist, relativ zur ersten Richtung schräg zu einer von der Batteriezellgruppe (2) abgewandten Seite hin angeordnet ist.

4. Batterie (10) nach Anspruch 3, wobei der Arretierträger ein trapezförmiger Träger ist.

5. Batterie (10) nach einem der Ansprüche 1-4, wobei eine Oberfläche der Batteriezellgruppe (2), die dem Arretierträger zugewandt ist, relativ zur ersten Richtung schräg zu einer von dem Arretierträger abgewandten Seite hin angeordnet ist.

6. Batterie (10) nach einem der Ansprüche 3-5, wobei ein eingeschlossener Winkel zwischen der Oberfläche des Arretierträgers, die der Batteriezellgruppe (2) zugewandt ist, und der Oberfläche der Batteriezellgruppe (2), die dem Arretierträger zugewandt ist, größer als 0° und kleiner als 90° ist.

7. Batterie (10) nach Anspruch 1, wobei die keilförmige Komponente (13) ferner umfasst:
eine dritte Oberfläche (1303), die die erste Oberfläche (1301) und die zweite Oberfläche (1302) verbindet; und
einen ersten Erstreckungsabschnitt (1304), der sich von der dritten Oberfläche (1303) in der ersten Richtung von der Batteriezellgruppe (2) weg erstreckt, wobei der erste Erstreckungsabschnitt (1304) mit dem Arretierträger verbunden ist.

8. Batterie (10) nach einem der Ansprüche 1-7, wobei die Batterie (10) ferner umfasst:
eine Sammelschienenanordnung (24), die dazu ausgelegt ist, die Mehrzahl von Batteriezellen (20) elektrisch miteinander zu verbinden, wobei die Sammelschienenanordnung (24) an einem Ende der Batteriezellgruppe (2) in einer dritten Richtung angeordnet ist, wobei die dritte Richtung parallel zu einer Erstreckungsrichtung des Arretierträgers ist und die Erstreckungsrichtung des Arretierträgers senkrecht zur ersten Richtung ist.

9. Batterie (10) nach einem der Ansprüche 1-8, wobei der erste Träger (101) und der zweite Träger (102) Seitenwände des Gehäuses (11) sind.

10. Energieverbrauchsvorrichtung, umfassend: die Batterie (10) nach einem der Ansprüche 1-9, wobei die Batterie (10) dazu ausgelegt ist, elektrische Energie für die Energieverbrauchsvorrichtung bereitzustellen.

11. Verfahren zum Herstellen einer Batterie (10), umfassend:
Bereitstellen einer Batteriezellgruppe (2), wobei die Batteriezellgruppe (2) eine Mehrzahl von Batteriezellen (20) umfasst, die in einer ersten Richtung angeordnet sind;
Bereitstellen eines Gehäuses (11), wobei das Gehäuse (11) einen ersten Träger (101) und einen zweiten Träger (102) umfasst, die in der ersten Richtung beabstandet angeordnet sind, wobei die Batteriezellgruppe (2) zwischen dem ersten Träger (101) und dem zweiten Träger (102) angeordnet ist, mindestens einer von dem ersten Träger (101) und dem zweiten Träger (102) ein Arretierträger ist und zwischen dem Arretierträger und der Batteriezellgruppe (2) ein keilförmiger Spalt (12) vorgesehen ist;
Bereitstellen einer keilförmigen Komponente (13); und
Füllen des keilförmigen Spalts (12) mit der keilförmigen Komponente (13), um die Batteriezellgruppe (2) an dem Gehäuse (11) zu arretieren;
wobei die keilförmige Komponente (13) eine erste Oberfläche (1301) und eine zweite Oberfläche (1302) umfasst, die einander gegenüberliegend angeordnet sind, wobei die erste Oberfläche (1301) der Oberfläche der Batteriezellgruppe (2), die dem Arretierträger zugewandt ist, gegenüberliegend und parallel angeordnet ist, und die zweite Oberfläche (1302) der Oberfläche des Arretierträgers, die der Batteriezellgruppe (2) zugewandt ist, gegenüberliegend und parallel angeordnet ist; und
wobei die Batterie (10) ferner umfasst:
eine Endplatte (23), die zwischen dem Arretierträger und der Batteriezellgruppe (2) angeordnet und an der Batteriezellgruppe (2) befestigt ist, wobei an einer Seite der Endplatte (23), die dem Arretierträger zugewandt ist, eine Stufe (231) vorgesehen ist; und
wobei die keilförmige Komponente (13) ferner umfasst:
eine dritte Oberfläche (1303), die die erste Oberfläche (1301) und die zweite Oberfläche (1302) verbindet; und
einen zweiten Erstreckungsabschnitt (1305), der sich von der dritten Oberfläche (1303) in der ersten Richtung auf die Batteriezellgruppe (2) zu erstreckt, wobei der zweite Erstreckungsabschnitt (1305) so ausgelegt ist, dass er mit der Stufe (231) zusammenwirkt, um die Endplatte (23) in einer zweiten Richtung zu begrenzen, wobei die zweite Richtung senkrecht zur ersten Richtung und senkrecht zu einer Erstreckungsrichtung des Arretierträgers ist und die Erstreckungsrichtung des Arretierträgers senkrecht zur ersten Richtung ist.

12. Vorrichtung zum Herstellen einer Batterie (10), umfassend:
ein Bereitstellungsmodul, das dazu ausgelegt ist:
eine Batteriezellgruppe (2) bereitzustellen, wobei die Batteriezellgruppe (2) eine Mehrzahl von Batteriezellen (20) umfasst, die in einer ersten Richtung angeordnet sind;
ein Gehäuse (11) bereitzustellen, wobei das Gehäuse (11) einen ersten Träger (101) und einen zweiten Träger (102) umfasst, die in der ersten Richtung beabstandet angeordnet sind, wobei die Batteriezellgruppe (2) zwischen dem ersten Träger (101) und dem zweiten Träger (102) angeordnet ist, mindestens einer des ersten Trägers (101) und des zweiten Trägers (102) ein Arretierträger ist und zwischen dem Arretierträger und der Batteriezellgruppe (2) ein keilförmiger Spalt (12) vorgesehen ist; und
eine keilförmige Komponente (13) bereitzustellen; und
ein Befestigungsmodul, das dazu ausgelegt ist:
den keilförmigen Spalt (12) mit der keilförmigen Komponente (13) zu füllen, um die Batteriezellgruppe (2) an dem Gehäuse (11) zu arretieren.
wobei die keilförmige Komponente (13) eine erste Oberfläche (1301) und eine zweite Oberfläche (1302) umfasst, die einander gegenüberliegend angeordnet sind, wobei die erste Oberfläche (1301) der Oberfläche der Batteriezellgruppe (2), die dem Arretierträger zugewandt ist, gegenüberliegend und parallel angeordnet ist, und die zweite Oberfläche (1302) der Oberfläche des Arretierträgers, die der Batteriezellgruppe (2) zugewandt ist, gegenüberliegend und parallel angeordnet ist; und
wobei die Batterie (10) ferner umfasst:
eine Endplatte (23), die zwischen dem Arretierträger und der Batteriezellgruppe (2) angeordnet und an der Batteriezellgruppe (2) befestigt ist, wobei an einer Seite der Endplatte (23), die dem Arretierträger zugewandt ist, eine Stufe (231) vorgesehen ist; und
wobei die keilförmige Komponente (13) ferner umfasst:
eine dritte Oberfläche (1303), die die erste Oberfläche (1301) und die zweite Oberfläche (1302) verbindet; und
einen zweiten Erstreckungsabschnitt (1305), der sich von der dritten Oberfläche (1303) in der ersten Richtung auf die Batteriezellgruppe (2) zu erstreckt, wobei der zweite Erstreckungsabschnitt (1305) so ausgelegt ist, dass er mit der Stufe (231) zusammenwirkt, um die Endplatte (23) in einer zweiten Richtung zu begrenzen, wobei die zweite Richtung senkrecht zur ersten Richtung und senkrecht zu einer Erstreckungsrichtung des Arretierträgers ist und die Erstreckungsrichtung des Arretierträgers senkrecht zur ersten Richtung ist.

## Revendications

1. Batterie (10), comprenant :
un groupe de cellules de batterie (2) comprenant une pluralité de cellules de batterie (20) disposées dans une première direction ;
un boîtier (11) comprenant une première poutre (101) et une deuxième poutre (102) qui sont disposées à un certain intervalle l'une de l'autre dans la première direction, le groupe de cellules de batterie (2) étant disposé entre la première poutre (101) et la deuxième poutre (102), au moins l'une de la première poutre (101) et de la deuxième poutre (102) étant une poutre de verrouillage,
et un espace en forme de coin (12) étant prévu entre la poutre de verrouillage et le groupe de cellules de batterie (2) ; et
un composant en forme de coin (13) configuré pour combler l'espace en forme de coin (12), de manière à verrouiller le groupe de cellules de batterie (2) au boîtier (11) ;
le composant en forme de coin (13) comprenant une première surface (1301) et une deuxième surface (1302) opposées l'une à l'autre, la première surface (1301) étant disposée en regard et en parallèle de la surface du groupe de cellules de batterie (2) qui est dirigée vers la poutre de verrouillage, et la deuxième surface (1302) étant disposée en regard et en parallèle de la surface de la poutre de verrouillage qui est dirigée vers le groupe de cellules de batterie (2) ; et
le batterie (10) comprenant en outre :
une plaque d'extrémité (23) disposée entre la poutre de verrouillage et le groupe de cellules de batterie (2) et fixée au groupe de cellules de batterie (2), une marche (231) étant formée sur une face de la plaque d'extrémité (23) qui est dirigé vers la poutre de verrouillage ; et
le composant en forme de coin (13) comprenant en outre :
une troisième surface (1303) raccordant la première surface (1301) et la deuxième surface (1302) ; et
une deuxième partie d'extension (1305) s'étendant à partir de la troisième surface (1303) dans la première direction vers le groupe de cellules de batterie (2), la deuxième partie d'extension (1305) étant configurée pour coopérer avec la marche (231) pour limiter la plaque d'extrémité (23) dans une deuxième direction, la deuxième direction étant perpendiculaire à la première direction et perpendiculaire à une direction d'extension de la poutre de verrouillage, la direction d'extension de la poutre de verrouillage étant perpendiculaire à la première direction.

2. Batterie (10) selon la revendication 1, dans laquelle le composant en forme de coin (13) est fixé sur la poutre de verrouillage.

3. Batterie (10) selon la revendication 1 ou 2, dans laquelle une surface de la poutre de verrouillage dirigée vers le groupe de cellules de batterie (2) est agencée obliquement vers une face opposée au groupe de cellules de batterie (2) relativement à la première direction.

4. Batterie (10) selon la revendication 3, dans laquelle la poutre de verrouillage est une poutre trapézoïdale.

5. Batterie (10) selon l'une quelconque des revendications 1 à 4, dans laquelle une surface du groupe de cellules de batterie (2) dirigée vers la poutre de verrouillage est agencée obliquement vers une face opposée à la poutre de verrouillage relativement à la première direction.

6. Batterie (10) selon l'une quelconque des revendications 3 à 5, dans laquelle un angle inclus entre la surface de la poutre de verrouillage qui est dirigée vers le groupe de cellules de batterie (2) et la surface du groupe de cellules de batterie (2) qui est dirigée vers la poutre de verrouillage est supérieur à 0° et inférieur à 90°.

7. Batterie (10) selon la revendication 1, dans laquelle le composant en forme de coin (13) comprend en outre :
une troisième surface (1303) raccordant la première surface (1301) et la deuxième surface (1302) ; et
une première partie d'extension (1304) s'étendant de la troisième surface (1303) dans la première direction à l'opposé du groupe de cellules de batterie (2), la première partie d'extension (1304) étant raccordée à la poutre de verrouillage.

8. Batterie (10) selon l'une quelconque des revendications 1 à 7, laquelle batterie (10) comprend en outre :
un composant de bus (24) configuré pour connecter électriquement la pluralité de cellules de batterie (20), le composant de bus (24) étant disposé à une extrémité du groupe de cellules de batterie (2) dans une troisième direction, la troisième direction étant parallèle à une direction d'extension de la poutre de verrouillage, et la direction d'extension de la poutre de verrouillage étant perpendiculaire à la première direction.

9. Batterie (10) selon l'une quelconque des revendications 1 à 8, dans laquelle la première poutre (101) et la deuxième poutre (102) sont des parois latérales du boîtier (11).

10. Appareil consommateur d'énergie, comprenant : la batterie (10) selon l'une quelconque des revendications 1 à 9, dans lequel la batterie (10) est configurée pour fournir de l'énergie électrique à l'appareil consommateur d'énergie.

11. Procédé de fabrication d'une batterie (10), comprenant :
la fourniture d'un groupe de cellules de batterie (2), le groupe de cellules de batterie (2) comprenant une pluralité de cellules de batterie (20) disposées dans une première direction ;
la fourniture d'un boîtier (11), le boîtier (11) comprenant une première poutre (101) et une deuxième poutre (102) qui sont disposées à un certain intervalle l'une de l'autre dans la première direction, le groupe de cellules de batterie (2) étant disposé entre la première poutre (101) et la deuxième poutre (102), au moins l'une de la première poutre (101) et de la deuxième poutre (102) étant une poutre de verrouillage, et un espace en forme de coin (12) étant prévu entre la poutre de verrouillage et le groupe de cellules de batterie (2) ;
la fourniture d'un composant en forme de coin (13) ; et
le comblement de l'espace en forme de coin (12) avec le composant en forme de coin (13), de manière à verrouiller le groupe de cellules de batterie (2) au boîtier (11) ;
le composant en forme de coin (13) comprenant une première surface (1301) et une deuxième surface (1302) opposées l'une à l'autre, la première surface (1301) étant disposée en regard et en parallèle de la surface du groupe de cellules de batterie (2) qui est dirigée vers la poutre de verrouillage, et la deuxième surface (1302) étant disposée en regard et en parallèle de la surface de la poutre de verrouillage qui est dirigée vers le groupe de cellules de batterie (2) ; et
le batterie (10) comprenant en outre :
une plaque d'extrémité (23) disposée entre la poutre de verrouillage et le groupe de cellules de batterie (2) et fixée au groupe de cellules de batterie (2), une marche (231) étant formée sur une face de la plaque d'extrémité (23) qui est dirigé vers la poutre de verrouillage ; et
le composant en forme de coin (13) comprenant en outre :
une troisième surface (1303) raccordant la première surface (1301) et la deuxième surface (1302) ; et
une deuxième partie d'extension (1305) s'étendant à partir de la troisième surface (1303) dans la première direction vers le groupe de cellules de batterie (2), la deuxième partie d'extension (1305) étant configurée pour coopérer avec la marche (231) pour limiter la plaque d'extrémité (23) dans une deuxième direction, la deuxième direction étant perpendiculaire à la première direction et perpendiculaire à une direction d'extension de la poutre de verrouillage, la direction d'extension de la poutre de verrouillage étant perpendiculaire à la première direction.

12. Appareil de fabrication d'une batterie (10), comprenant :
un module de fourniture, configuré pour :
fournir un groupe de cellules de batterie (2), le groupe de cellules de batterie (2) comprenant une pluralité de cellules de batterie (20) disposées dans une première direction ;
fournir un boîtier (11), le boîtier (11) comprenant une première poutre (101) et une deuxième poutre (102) qui sont disposées à un certain intervalle l'une de l'autre dans la première direction, le groupe de cellules de batterie (2) étant disposé entre la première poutre (101) et la deuxième poutre (102), au moins l'une de la première poutre (101) et de la deuxième poutre (102) étant une poutre de verrouillage, et un espace en forme de coin (12) étant prévu entre la poutre de verrouillage et le groupe de cellules de batterie (2) ; et
fournir un composant en forme de coin (13) ; et
un module de montage configuré pour :
combler l'espace en forme de coin (12) avec le composant en forme de coin (13), de manière à verrouiller le groupe de cellules de batterie (2) au boîtier (11) ;
le composant en forme de coin (13) comprenant une première surface (1301) et une deuxième surface (1302) opposées l'une à l'autre, la première surface (1301) étant disposée en regard et en parallèle de la surface du groupe de cellules de batterie (2) qui est dirigée vers la poutre de verrouillage, et la deuxième surface (1302) étant disposée en regard et en parallèle de la surface de la poutre de verrouillage qui est dirigée vers le groupe de cellules de batterie (2) ; et
le batterie (10) comprenant en outre :
une plaque d'extrémité (23) disposée entre la poutre de verrouillage et le groupe de cellules de batterie (2) et fixée au groupe de cellules de batterie (2), une marche (231) étant formée sur une face de la plaque d'extrémité (23) qui est dirigé vers la poutre de verrouillage ; et
le composant en forme de coin (13) comprenant en outre :
une troisième surface (1303) raccordant la première surface (1301) et la deuxième surface (1302) ; et
une deuxième partie d'extension (1305) s'étendant à partir de la troisième surface (1303) dans la première direction vers le groupe de cellules de batterie (2), la deuxième partie d'extension (1305) étant configurée pour coopérer avec la marche (231) pour limiter la plaque d'extrémité (23) dans une deuxième direction, la deuxième direction étant perpendiculaire à la première direction et perpendiculaire à une direction d'extension de la poutre de verrouillage, la direction d'extension de la poutre de verrouillage étant perpendiculaire à la première direction.
